# EUROPEAN PATENT SPECIFICATION

(11) **EP 3 395 851 B1**
(45) Date of publication and mention of the grant of the patent: **10.03.2021**
(21) Application number: 16878806.5
(22) Date of filing: 21.12.2016
(51) Int. Cl.: C08G 59/20, C08G 59/24, C08G 59/40, C08G 59/42, C08G 59/38, C08G 59/36, C08G 59/22, C08G 59/28, C08J 5/24

(54) **EPOXY RESIN COMPOSITION, FIBER-REINFORCED COMPOSITE MATERIAL, MOLDED ARTICLE, AND PRESSURE VESSEL**
EPOXIDHARZZUSAMMENSETZUNG, FASERVERSTÄRKTES VERBUNDMATERIAL, FORMARTIKEL UND DRUCKBEHÄLTER
COMPOSITION DE RÉSINE ÉPOXYDE, MATÉRIAU COMPOSITE RENFORCÉ PAR DES FIBRES, ARTICLE MOULÉ, ET RÉCIPIENT SOUS PRESSION

(30) Priority: 25.12.2015 JP 2015253480; 25.12.2015 JP 2015253481; 25.12.2015 JP 2015253482; 25.12.2015 JP 2015253485
(43) Date of publication of application: 31.10.2018
(73) Proprietor: Toray Industries, Inc., Tokyo 103-8666 (JP)
(72) Inventor: MORI, Ayumi, Iyo-gun Ehime 791-3193 (JP); HIRANO, Noriyuki, Iyo-gun Ehime 791-3193 (JP); MIYOSHI, Masayuki, Iyo-gun Ehime 791-3193 (JP)
(74) Representative: Mewburn Ellis LLP
(86) International application number: PCT/JP2016/088201
(87) International publication number: WO 2017/110919

(56) References cited:
- EP-A1- 2 551 288
- WO-A1-2010/109929
- WO-A1-2012/102201
- WO-A1-2014/112180
- WO-A1-2015/019965
- WO-A1-2016/063692
- WO-A1-2016/208618
- JP-A- 2001 323 046
- JP-A- 2002 327 041
- JP-A- 2002 347 148
- JP-A- 2004 066 637
- JP-A- 2005 120 127
- JP-A- 2012 067 190
- JP-A- 2013 173 812
- JP-A- 2016 084 451
- JP-A- 2016 132 708

## Description

### TECHNICAL FIELD

The present invention relates to an epoxy resin composition, a fiber reinforced material, a molded article, and a pressure vessel.

### BACKGROUND ART

Epoxy resins are widely used in industrial fields of coating materials, adhesives, electric and electronic information materials, advanced composite materials and the like owing to their excellent mechanical properties. Epoxy resins are particularly heavily used in fiber reinforced materials made from a reinforcing fiber such as a carbon fiber, a glass fiber, and an aramid fiber, and a matrix resin, as disclosed in EP 2551 288 A1.

As a method for producing a fiber reinforced material, an appropriate method is selected from methods such as a prepreg method, hand lay-up, filament winding, pultrusion, and Resin Transfer Molding (RTM). Of these methods, the filament winding, pultrusion, and RTM in which a liquid resin is used are particularly actively applied to industrial applications such as pressure vessels, electric wires, and automobiles.

In general, a fiber reinforced material produced by the prepreg method has excellent mechanical properties of material because the arrangement of the reinforcing fiber is precisely controlled. Meanwhile, with the recent growing interest in the environment and the trend toward greenhouse gas emission control, higher strength is required of fiber reinforced materials made from a liquid resin similarly to the case of those produced by the prepreg method.

As vessels for storing a high-pressure gas, metal vessels made from steel or an aluminum alloy have been conventionally used. Metal pressure vessels, however, are heavy, and require effort to move and transport. For this reason, in recent years, pressure vessels reinforced with fiber reinforced materials have attracted attention. Furthermore, automobiles running on natural gas and automobiles equipped with a fuel cell system are attracting attention as low-pollution vehicles, and these automobiles are equipped with pressure vessels for storing fuel. For these automobiles, a pressure vessel capable of storing a larger amount of fuel is required in order to increase the mileage of the automobiles without replenishment of fuel. For this purpose, it is necessary to increase the pressure resistance of a pressure vessel, and to reduce the weight of a pressure vessel from the viewpoint of fuel economy. The weight reduction is also required in pressure vessels used in air respirators and the like for reducing the burden on humans. In addition, there is also a demand for a pressure vessel that is small in the reduction of pressure resistance, which is caused by the repeated load applied at the time of filling and pressure discharge of a high-pressure gas. In a pressure vessel reinforced with a fiber reinforced material, the mechanical properties of material, such as the pressure resistance, of the pressure vessel are governed by the properties of the fiber reinforced material, and improvement in the performance of the fiber reinforced material is required.

Patent Document 1 discloses a resin for filament winding that contains acrylamide or phthalimide and that is capable of providing a fiber reinforced material excellent in torsional strength owing to its high adhesiveness to a reinforcing fiber.

Patent Document 2 discloses a resin for RTM that contains a substituted phenyl glycidyl ether and that is capable of providing a fiber reinforced material excellent in workability and mechanical strength.

Patent Document 3 discloses a resin composition that contains a monofunctional epoxy, in particular, glycidyl phthalimide, and a trifunctional or higher functional epoxy resin, and that is capable of improving impact resistance and mechanical properties at low temperatures.

Patent Document 4 discloses an epoxy resin composition that contains p-tert-butyl phenyl glycidyl ether as a reactive compound and that is excellent in heat resistance and compression properties.

Patent Document 5 discloses a resin composition that contains a substituted phenyl glycidyl ether and nano silica fine particles and that is capable of improving the elastic modulus and heat resistance.

Patent Document 6 discloses an epoxy resin composition that contains a substituted phenyl glycidyl ether and a trifunctional or higher functional epoxy resin, and that is capable of providing a fiber reinforced material excellent in fatigue characteristics in thermal cycling.

Patent Document 7 discloses a resin composition for RTM that contains an alicyclic amine compound and a reactive catalyst and that is capable of being cured at low temperatures in a short time.

Patent Document 8 discloses an epoxy resin composition that contains a monofunctional epoxy resin, a polyfunctional epoxy resin, and a core shell polymer and that is excellent in elastic modulus and fracture toughness.

Patent Document 9 discloses a resin composition for a prepreg that contains a monofunctional epoxy having a biphenyl backbone and that is capable of providing a fiber reinforced material excellent in strength and elongation.

Patent Document 10 discloses a low-viscosity epoxy resin composition containing a monofunctional epoxy as a reactive diluent.

Patent Document 11 discloses a tank that includes a helical layer and a hoop layer each made from a resin, in which the resin of the helical layer is more elastic than the resin of the hoop layer so that the tank is capable of being improved in burst strength and being thinned.

Patent Document 12 discloses a technique of controlling the thickness of a prepreg wound around a liner to improve the pressure capacity.

Patent Document 13 discloses a pressure vessel that is suppressed in the occurrence of 90° cracks and is improved in durability owing to the defined elongations of a fiber reinforced material, which forms an outer shell of the pressure vessel, in a fiber direction and a direction perpendicular to the fiber direction.

### PRIOR ART DOCUMENTS

### PATENT DOCUMENTS

Patent Document 1: Japanese Patent Laid-open Publication No. 2000-212254
Patent Document 2: Japanese Patent Laid-open Publication No. 2005-120127
Patent Document 3: Japanese Patent Laid-open Publication No. 2010-59225
Patent Document 4: Japanese Patent No. 4687167
Patent Document 5: Japanese Patent Laid-open Publication No. 2010-174073
Patent Document 6: Japanese Patent Laid-open Publication No. 2012-82394
Patent Document 7: Published Japanese Translation No. 2015-508125
Patent Document 8: Japanese Patent Laid-open Publication No. 2011-46797
Patent Document 9: Japanese Patent Laid-open Publication No. 2006-265458
Patent Document 10: Published Japanese Translation No. 2009-521589
Patent Document 11: Japanese Patent Laid-open Publication No. 2008-32088
Patent Document 12: Japanese Patent Laid-open Publication No. 2000-313069
Patent Document 13: Japanese Patent Laid-open Publication No. 8-219393

### SUMMARY OF THE INVENTION

### PROBLEMS TO BE SOLVED BY THE INVENTION

In Patent Document 1, although the fiber reinforced material is improved in torsional strength and compression strength, the fiber reinforced material is insufficient in tensile strength translation rate. Patent Document 2 discloses a low-viscosity resin having heat resistance, but the fiber reinforced material of Patent Document 2 is insufficient in tensile strength translation rate. Also in Patent Document 3, the fiber reinforced material is insufficient in tensile strength translation rate. Furthermore, the resin composition disclosed in Patent Document 3 is intended for prepregs and has a high viscosity, and cannot be applied to a process in which a liquid resin is used. In addition, the performance of this resin composition is improved by control of the arrangement of thermoplastic particles. It is difficult to apply such a design unique to a laminate to a process in which a liquid resin is used, in particular, pultrusion or filament winding.

Although Patent Document 4 is effective for improving the cylinder torsional strength, the fiber reinforced material of Patent Document 4 is insufficient in tensile strength translation rate. Although Patent Document 5 is effective for improving the compression strength, the fiber reinforced material of Patent Document 5 is insufficient in tensile strength translation rate. Although the fiber reinforced material of Patent Document 6 is excellent in fatigue characteristics, it is insufficient in tensile strength translation rate.

Furthermore, although the resin composition shown in Patent Document 7 is capable of being cured at low temperatures, the fiber reinforced material of Patent Document 7 is insufficient in tensile strength translation rate. Although Patent Document 8 is effective for improving the impact resistance, the fiber reinforced material of Patent Document 8 is insufficient in tensile strength translation rate. Although a fiber reinforced material excellent in heat resistance is obtained in Patent Document 9, the fiber reinforced material is insufficient in tensile strength translation rate. Although a low-viscosity resin composition is obtained in Patent Document 10, the fiber reinforced material of Patent Document 10 is insufficient in tensile strength translation rate.

Furthermore, the resin compositions disclosed in Patent Documents 4 to 6 and 9 are intended for prepregs and have a high viscosity, and cannot be applied to a process in which a liquid resin is used.

In the inventions disclosed in Patent Documents 11 and 12, the tank and the pressure vessel are not sufficiently resistant to the repeated load applied at the time of filling and pressure discharge of a high-pressure gas. In the invention disclosed in Patent Document 13, although the pressure vessel is well suppressed in 90° cracks, it is insufficient in strain translation rate.

An object of the present invention is to provide an epoxy resin composition capable of providing a fiber reinforced material having high tensile strength translation rate, and to provide a fiber reinforced material having high tensile strength translation rate, a molded article, and a pressure vessel that contain the epoxy resin composition as a matrix resin.

Another object of the present invention is to provide a pressure vessel that exhibits a great weight reduction effect, and is resistant to the repeated load applied at the time of filling and pressure discharge of a high-pressure gas.

### SOLUTIONS TO THE PROBLEMS

As a result of intensive studies to solve the above-mentioned problems, the present inventors found an epoxy resin composition having the following constitution, and completed the present invention. That is, the epoxy resin composition of the present invention has the following constitution.

An epoxy resin composition including the following constituent elements [A] to [C], wherein the constituent element [C] is the following constituent element [c1] or [c2], and a cured product of the epoxy resin composition has a rubbery state elastic modulus in a dynamic viscoelasticity evaluation of 10 MPa or less:
[A] a phenyl glycidyl ether substituted with a tert-butyl group, a sec-butyl group, an isopropyl group, or a phenyl group;
[B] a bifunctional or higher functional aromatic epoxy resin; and
[C] a hardener:
   [c1] an acid anhydride hardener, wherein the epoxy resin composition comprises an imidazole compound or a tertiary amine compound as an accelerator; or
   [c2] aliphatic amine hardeners used in combination.

Furthermore, the fiber reinforced material of the present invention is made from a cured product of the epoxy resin composition and a reinforcing fiber.

Furthermore, the molded article of the present invention and the pressure vessel according to a first aspect of the present invention are made from the fiber reinforced material.

In addition, the present inventors found the following pressure vessel, and completed the present invention. That is, the pressure vessel according to a second aspect of the present invention is a pressure vessel including a liner and a fiber reinforced material layer covering the liner, wherein the fiber reinforced material layer is made from a fiber reinforced material containing a cured product of a thermosetting resin composition and a reinforcing fiber, the fiber reinforced material has a glass transition temperature of 95°C or higher, and the pressure vessel has a strain translation rate of 85% or more.

### EFFECTS OF THE INVENTION

The fiber reinforced material and the molded article of the present invention, and the pressure vessel according to a first aspect of the present invention, which contain the epoxy resin composition of the present invention as a matrix resin, have high tensile strength translation rate.

In addition, the pressure vessel according to a second aspect of the present invention exhibits a great weight reduction effect, and is resistant to the repeated load applied at the time of filling and pressure discharge of a high-pressure gas.

### EMBODIMENTS OF THE INVENTION

The epoxy resin composition of the present invention is an epoxy resin composition including the following constituent elements [A] to [C], wherein the constituent element [C] is the following constituent element [c1] or [c2], and a cured product of the epoxy resin composition has a rubbery state elastic modulus in a dynamic viscoelasticity evaluation of 10 MPa or less:
[A] a phenyl glycidyl ether substituted with a tert-butyl group, a sec-butyl group, an isopropyl group, or a phenyl group;
[B] a bifunctional or higher functional aromatic epoxy resin; and
[C] a hardener:
   [c1] an acid anhydride hardener, wherein the epoxy resin composition comprises an imidazole compound or a tertiary amine compound as an accelerator; or
   [c2] aliphatic amine hardeners used in combination.

The epoxy resin composition of the present invention includes the constituent elements [A] to [C].

The phenyl glycidyl ether substituted with any one of a tert-butyl group, a sec-butyl group, an isopropyl group, and a phenyl group, which is the constituent element [A] of the present invention, is a component necessary for providing a fiber reinforced material having high tensile strength translation rate. The tensile strength translation rate is an index of utilization of the strength of the reinforcing fiber by the fiber reinforced material. Among fiber reinforced materials made from the same amount of reinforcing fibers of the same kind, a fiber reinforced material having a higher tensile strength translation rate shows a higher tensile strength. Examples of such a phenyl glycidyl ether, that is, an epoxy resin include o-phenylphenol glycidyl ether, p-phenylphenol glycidyl ether, p-tert-butyl phenyl glycidyl ether, p-sec-butyl phenyl glycidyl ether, and p-isopropyl phenyl glycidyl ether.

The constituent element [B] is a bifunctional or higher functional epoxy resin containing an aromatic ring. A "bifunctional or higher functional epoxy resin" is a compound having two or more epoxy groups in one molecule. Examples of such an epoxy resin include novolac epoxy resins such as bisphenol A epoxy resin, bisphenol F epoxy resin, bisphenol S epoxy resin, biphenyl epoxy resin, naphthalene epoxy resin, an epoxy resin containing a dicyclopentadiene backbone, fluorene epoxy resin, phenol novolac epoxy resin, and cresol novolac epoxy resin; biphenyl aralkyl epoxy resin and zylock epoxy resin; and glycidyl amine epoxy resins such as N,N,O-triglycidyl-m-aminophenol, N,N,O-triglycidyl-p-aminophenol, N,N,O-triglycidyl-4-amino-3-methylphenol, N,N,N',N'-tetraglycidyl-4,4'-methylenedianiline, N,N,N',N'-tetraglycidyl-2,2'-diethyl-4,4'-methylenedianiline, N,N,N',N'-tetraglycidyl-m-xylylenediamine, and diglycidyl aniline. These may be used singly or in combination of plural kinds.

The constituent element [C] is a hardener, and is the following constituent element [c1] or [c2]:
[c1] an acid anhydride hardener, wherein the epoxy resin composition comprises an imidazole compound or a tertiary amine compound as an accelerator; or
[c2] aliphatic amine hardeners used in combination.

The constituent element [c1] is an acid anhydride hardener. An "acid anhydride hardener" is a compound having one or more acid anhydride groups in the molecule. Examples of the acid anhydride hardener include methyltetrahydrophthalic anhydride, hexahydrophthalic anhydride, methylhexahydrophthalic anhydride, tetrahydrophthalic anhydride, methylnadic anhydride, maleic anhydride, and succinic anhydride.

The constituent element [c2] is an aliphatic amine hardener. An "aliphatic amine hardener" is an aliphatic compound having one or more primary or secondary amino groups in the molecule. Examples of the aliphatic amine hardener include isophoronediamine, diethylenetriamine, triethylenetetramine, hexamethylenediamine, N-aminoethylpiperazine, 4,4'-methylenebiscyclohexylamine, 2,2'-dimethyl-4,4'-methylenebiscyclohexylamine, cyclohexanediamine, 1,3-bisaminomethylcyclohexane, and an aliphatic polyamine having an alkylene glycol structure.

A cured product of the epoxy resin composition of the present invention has a rubbery state elastic modulus in a dynamic viscoelasticity evaluation of 10 MPa or less. When the rubbery state elastic modulus is set within this range, the resulting fiber reinforced material exhibits high tensile strength translation rate. In the present invention, the tensile strength of the fiber reinforced material is evaluated based on the tensile strength translation rate. Herein, the rubbery state elastic modulus is an index having a correlation with the cross-linking density. In general, the lower the cross-linking density is, the lower the rubbery state elastic modulus is. The tensile strength translation rate is represented by (tensile strength of fiber reinforced material)/(strand tensile strength of reinforcing fiber × fiber volume content) × 100. A larger tensile strength translation rate value means that the performance of the reinforcing fiber is more effectively utilized, and it can be said that a great weight reduction effect is exerted.

In the epoxy resin composition according to a first preferable aspect of the present invention, it is preferable that the constituent element [B] be the following constituent element [b1] or [b2], and the epoxy resin composition have a cure shrinkage rate of 3.5 to 7.0%:
[b1] an optionally substituted diglycidyl aniline; or
[b2] tetraglycidyl diaminodiphenylmethane.

The constituent element [b1] is an optionally substituted diglycidyl aniline. Examples of the substituent include an alkyl group having a carbon number of 1 to 4, a phenyl group, and a phenoxy group. An alkyl group having a carbon number of 1 to 4 is preferable because it suppresses the viscosity increase of the epoxy resin. Examples of such an epoxy resin include diglycidyl aniline, diglycidyl toluidine, and N,N-diglycidyl-4-phenoxyaniline.

The constituent element [b2] is tetraglycidyl diaminodiphenylmethane.

The epoxy resin composition according to the first preferable aspect of the present invention preferably contains 15 to 50 parts by mass of the constituent element [A] in 100 parts by mass of total epoxy resins. When the content of the constituent element [A] is set within this range, an epoxy resin composition capable of providing a fiber reinforced material excellent in the balance between cure shrinkage rate and tensile strength translation rate can be easily obtained.

The epoxy resin composition according to the first preferable aspect of the present invention preferably contains two or more components shown as the constituent element [A]. Introduction of steric effects different in the structure or substitution position further suppresses the intermolecular movement.

The epoxy resin composition according to the first preferable aspect of the present invention may further contain an epoxy resin other than the constituent elements [A], [b1], and [b2] as long as the effect of the present invention is not impaired, in particular, as long as the viscosity is within a tolerable range. The epoxy resin other than the constituent elements [A], [b1], and [b2] is suitably used because such an epoxy resin can adjust the balance among mechanical properties of material, heat resistance, and impact resistance, and the process compatibility such as viscosity depending on the intended use.

Examples of the epoxy resin other than the constituent elements [A], [b1], and [b2] include bisphenol A epoxy resin, bisphenol F epoxy resin, bisphenol S epoxy resin, biphenyl epoxy resin, naphthalene epoxy resin, aminophenol epoxy resin, phenol novolac epoxy resin, an epoxy resin containing a dicyclopentadiene backbone, a phenyl glycidyl ether epoxy resin other than the constituent element [A], and a reactive diluent having an epoxy group. These may be used singly or in combination of plural kinds.

The combination of the constituent element [b1] or [b2] with the constituent element [A] provides a fiber reinforced material having a better balance between cure shrinkage rate and tensile strength translation rate.

In the epoxy resin composition according to the first preferable aspect of the present invention, the constituent element [B] preferably includes the constituent elements [b1] and [b2] simultaneously. This is because the epoxy resin composition is excellent in workability as a liquid resin, and a fiber reinforced material that is better in the balance between cure shrinkage rate and tensile strength translation rate and is also excellent in heat resistance can be obtained.

Furthermore, a cure shrinkage rate of 3.5% or more suppresses the friction between the cured resin and the mold during pultrusion molding, so that the pultrusion step is stabilized and the generation of resin sludge is suppressed. A cure shrinkage rate of 7.0% or less suppresses the internal (shrinkage) stress generated between the cured epoxy resin and the reinforcing fiber, and provides a fiber reinforced material having high tensile strength translation rate. Herein, the cure shrinkage rate is determined by measuring the specific gravities of an uncured epoxy resin composition and a cured epoxy resin composition at 23°C according to the method A (immersion method) of JIS K 7112 (1999), and calculating the numerical value according to the calculation formula: (specific gravity of cured epoxy resin composition - specific gravity of uncured epoxy resin composition) ÷ specific gravity of cured epoxy resin composition × 100.

The conditions for curing the epoxy resin composition of the present invention are not particularly limited, and are appropriately selected according to the properties of the hardener.

In general, a thermosetting resin shrinks in volume due to cross-linking during curing. Therefore, the higher the cross-linking density is, the higher the cure shrinkage rate should be. Meanwhile, the higher the cross-linking density is, the higher the rubbery state elastic modulus is, and the lower the tensile strength translation rate of the molded article is. That is, it is difficult to achieve both a certain cure shrinkage rate and a low rubbery state elastic modulus. The epoxy resin composition according to the first preferable aspect of the present invention makes it possible to achieve both of them, and is a liquid epoxy resin composition capable of providing a fiber reinforced material excellent in the balance between cure shrinkage rate and tensile strength translation rate.

The reason why the epoxy resin composition according to the first preferable aspect of the present invention achieves both a low rubbery state elastic modulus and the cure shrinkage rate is unknown. However, it is presumably because the substituent of the constituent element [A], having potent steric effects, interferes with the curing reaction of the constituent element [C] to reduce the covalent cross-linkage and lower the cross-linking density, while the substituent of the constituent element [A], having potent steric effects, fills the free volume to increase the filling rate of the network, and consequently increases the cure shrinkage rate. In the cured product of the epoxy resin composition, the aromatic ring of the constituent element [b1], as steric effects, interferes with the substituent of the constituent element [A] such as a tert-butyl group or a phenyl group, and restricts the movement of the molecular chain. As a result, the density of covalent cross-linkage decreases, and at the same time, a bulky backbone further fills the free volume, so that the cure shrinkage rate is further increased. In general, the constituent element [b2] is a component that increases the cross-linking density. However, when the constituent element [b2] is used in combination with the constituent element [A], part of epoxy groups are affected by steric effects and remain unreacted, and serve as additional steric effects. Thus, the substituent of the constituent element [A], having potent steric effects, fills the free volume in a state where the cross-linking density is low to increase the cure shrinkage rate as in the case of the constituent element [b1]. That is, the cured epoxy resin obtained by curing the combination of the constituent elements [A], [b1] or [b2], and [C] achieves both a low rubbery state elastic modulus and a high cure shrinkage rate. Furthermore, use of the epoxy resin composition as a matrix resin provides a fiber reinforced material excellent in the balance between cure shrinkage rate and tensile strength translation rate.

In the epoxy resin composition according to a second preferable aspect of the present invention, it is preferable that the constituent element [B] be the following constituent element [b1] or [b2], and a cured product of the epoxy resin composition have a tensile elongation of 3.5% or less:
[b1] an optionally substituted diglycidyl aniline; or
[b2] tetraglycidyl diaminodiphenylmethane.

The constituent element [b1] is an optionally substituted diglycidyl aniline. Examples of the substituent include an alkyl group having a carbon number of 1 to 4, a phenyl group, and a phenoxy group. An alkyl group having a carbon number of 1 to 4 is preferable because it suppresses the viscosity increase of the epoxy resin. Examples of such an epoxy resin include diglycidyl aniline, diglycidyl toluidine, and N,N-diglycidyl-4-phenoxyaniline.

The constituent element [b2] is tetraglycidyl diaminodiphenylmethane.

The combination of the constituent element [b1] or [b2] with the constituent element [A] provides a fiber reinforced material that exhibits high tensile strength translation rate and high interlaminar shear strength after the wet heat treatment.

In the epoxy resin composition according to the second preferable aspect of the present invention, the constituent element [B] preferably includes the constituent elements [b1] and [b2] simultaneously. This is because the epoxy resin composition is excellent in workability as a liquid resin, and a fiber reinforced material having higher tensile strength translation rate and higher interlaminar shear strength after the wet heat treatment and is also excellent in heat resistance can be obtained.

The epoxy resin composition according to the second preferable aspect of the present invention preferably contains 20 to 50 parts by mass of the constituent element [A] in 100 parts by mass of total epoxy resins. When the content of the constituent element [A] is set within this range, a cured epoxy resin capable of providing a fiber reinforced material excellent in the balance between tensile strength translation rate and interlaminar shear strength after the wet heat treatment, which achieves both a low rubbery state elastic modulus and a low tensile elongation, can be easily obtained.

The epoxy resin composition according to the second preferable aspect of the present invention may further contain an epoxy resin other than the constituent elements [A], [b1], and [b2] as long as the effect of the present invention is not impaired, in particular, as long as the viscosity is within a tolerable range. The epoxy resin other than the constituent elements [A], [b1], and [b2] is suitably used because such an epoxy resin can adjust the balance among mechanical properties of material, heat resistance, and impact resistance, and the process compatibility such as viscosity depending on the intended use.

Examples of such an epoxy resin include bisphenol A epoxy resin, bisphenol F epoxy resin, bisphenol S epoxy resin, biphenyl epoxy resin, naphthalene epoxy resin, aminophenol epoxy resin, phenol novolac epoxy resin, an epoxy resin containing a dicyclopentadiene backbone, a phenyl glycidyl ether epoxy resin other than the constituent element [A], and a reactive diluent having an epoxy group. These may be used singly or in combination of plural kinds.

Furthermore, a tensile elongation of a cured product of the epoxy resin composition of 3.5% or less provides a fiber reinforced material having high tensile strength translation rate and high interlaminar shear strength after the wet heat treatment. High interlaminar shear strength after the wet heat treatment suppresses the decrease in strength even when the fiber reinforced material is used in a severe environment of high temperature and high humidity, and the fiber reinforced material is excellent in environmental resistance. Herein, the tensile elongation is a value measured according to JIS K 7113 (1995) using a small No. 1 (1/2) test piece.

The conditions for curing the epoxy resin composition of the present invention are not particularly limited, and are appropriately selected according to the properties of the hardener.

In general, in a cured epoxy resin, the lower the cross-linking density is, that is, the lower the rubbery state elastic modulus is, the higher the tensile elongation is. As for the epoxy resin composition according to the second preferable aspect of the present invention, it was found that the lower the rubbery state elastic modulus is, that is, the lower the cross-linking density is and the lower the tensile elongation is, the higher the tensile strength translation rate and the interlaminar shear strength after the wet heat treatment of the fiber reinforced material are, and the more excellent in heat resistance the fiber reinforced material is. More specifically, although it is generally difficult to achieve both low rubbery state elastic modulus and low tensile elongation, the epoxy resin composition according to the second preferable aspect of the present invention achieves both the properties, and is a liquid epoxy resin composition capable of providing a fiber reinforced material that has high tensile strength translation rate and high interlaminar shear strength after the wet heat treatment and that is excellent in heat resistance.

The reason why the epoxy resin composition according to the second preferable aspect of the present invention achieves both a low rubbery state elastic modulus and a low tensile elongation is unknown. However, it is presumably because the substituent of the constituent element [A], having potent steric effects, interferes with the curing reaction of the constituent element [C] to reduce the covalent cross-linkage and lower the cross-linking density, while the steric effects interfere with the molecular chain to inhibit free deformation of the network, resulting in low tensile elongation. In the cured product of the epoxy resin composition, the aromatic ring of the constituent element [b1], as steric effects, interferes with the substituent of the constituent element [A] such as a tert-butyl group or a phenyl group, and restricts the movement of the molecular chain. As a result, the density of covalent cross-linkage decreases, and at the same time, the tensile elongation decreases. In general, the constituent element [b2] is a component that increases the cross-linking density. However, when the constituent element [b2] is used in combination with the constituent element [A], part of epoxy groups are affected by steric effects and remain unreacted, and serve as additional steric effects. Thus, the molecular chain and the steric effects are entangled with each other in a state where the cross-linking density is low to decrease the tensile elongation as in the case of the constituent element [b1]. That is, the cured epoxy resin obtained by curing the combination of the constituent elements [A], [b1] or [b2], and [C] achieves both a low rubbery state elastic modulus and a low tensile elongation. Furthermore, use of the epoxy resin composition as a matrix resin provides a fiber reinforced material having high tensile strength translation rate and is excellent in heat resistance, and also having high interlaminar shear strength after the wet heat treatment.

The epoxy resin composition according to a third preferable aspect of the present invention preferably has a gel time at 80°C as measured with a rotorless cure meter of 15 to 100 minutes. When the gel time is set within this range, the epoxy resin composition is excellent in productivity.

The phenyl glycidyl ether substituted with a tert-butyl group, a sec-butyl group, an isopropyl group, or a phenyl group, which is the constituent element [A], is a component necessary for preventing the slowdown of the curing speed that is observed in a monofunctional epoxy resin and increasing the tensile strength translation rate. Examples of such an epoxy resin include o-phenylphenol glycidyl ether, p-tert-butyl phenyl glycidyl ether, p-sec-butyl phenyl glycidyl ether, and p-isopropyl phenyl glycidyl ether.

The epoxy resin composition according to the third preferable aspect of the present invention preferably contains 5 to 40 parts by mass of the constituent element [A] in 100 parts by mass of total epoxy resins. When the content of the constituent element [A] is set within this range, an epoxy resin composition capable of providing a fiber reinforced material excellent in the balance between curing speed and tensile strength translation rate can be easily obtained.

The epoxy resin composition according to the third preferable aspect of the present invention preferably contains two or more components shown as the constituent element [A]. Introduction of steric effects different in the structure or substitution position further suppresses the intermolecular movement.

In the epoxy resin composition according to the third preferable aspect of the present invention, the constituent element [B] is preferably the following constituent element [b1] or [b2]:
[b1] an optionally substituted diglycidyl aniline; or
[b2] tetraglycidyl diaminodiphenylmethane.

The combination of the constituent element [A] with the constituent element [b1] or [b2] is preferable because this combination can achieve the curing speed and tensile strength translation rate at a higher level, and provides an epoxy resin composition excellent in heat resistance.

The constituent element [b1] is an optionally substituted diglycidyl aniline. Examples of the substituent include an alkyl group having a carbon number of 1 to 4, a phenyl group, and a phenoxy group. An alkyl group having a carbon number of 1 to 4 is preferable because it suppresses the viscosity increase of the epoxy resin. Examples of such an epoxy resin include diglycidyl aniline, diglycidyl toluidine, and N,N-diglycidyl-4-phenoxyaniline.

The constituent element [b2] is tetraglycidyl diaminodiphenylmethane.

In the cured product of the epoxy resin composition, the aromatic ring of the constituent element [b1], as steric effects, interferes with the tert-butyl group, the sec-butyl group, the isopropyl group, or the phenyl group of the constituent element [A], and restricts the movement of the molecular chain. As a result, even if the cured epoxy resin composition is low in density of covalent cross-linkage, the cured epoxy resin composition exhibits high heat resistance. In general, the constituent element [b2] is a component that increases the cross-linking density to improve the heat resistance. However, when the constituent element [b2] is used in combination with the constituent element [A], part of the epoxy resin is affected by steric effects and remains unreacted, and serves as additional steric effects. Thus, movement of the molecular chain is restricted in a state where the cross-linking density is low as in the case of the constituent element [b1]. That is, the cured epoxy resin obtained by curing the combination of the constituent elements [A], [b1] or [b2], and [C] has an appropriate curing speed, and is capable of providing a fiber reinforced material having high tensile strength translation rate and is excellent in heat resistance.

In the epoxy resin composition according to the third preferable aspect of the present invention, the constituent element [B] preferably includes the constituent elements [b1] and [b2] simultaneously. When the constituent element [B] includes the constituent elements [b1] and [b2] simultaneously, the liquid resin is excellent in workability, and a fiber reinforced material excellent in the balance among curing speed, heat resistance, and tensile strength translation rate can be easily obtained.

The epoxy resin composition according to the third preferable aspect of the present invention may further contain an epoxy resin other than the constituent elements [A], [b1], and [b2] as long as the effect of the present invention is not impaired, in particular, as long as the viscosity is within a tolerable range. The epoxy resin other than the constituent elements [A], [b1], and [b2] is suitably used because such an epoxy resin can adjust the balance among mechanical properties of material, heat resistance, and impact resistance, and the process compatibility such as viscosity depending on the intended use.

Examples of such an epoxy resin include bisphenol A epoxy resin, bisphenol F epoxy resin, bisphenol S epoxy resin, biphenyl epoxy resin, naphthalene epoxy resin, aminophenol epoxy resin, phenol novolac epoxy resin, an epoxy resin containing a dicyclopentadiene backbone, a phenyl glycidyl ether epoxy resin other than the constituent element [A], and a reactive diluent having an epoxy group. These may be used singly or in combination of plural kinds.

The constituent element [A] is a monofunctional epoxy resin having a substituent having potent steric effects. A monofunctional epoxy suppresses the formation of a network and greatly reduces the cross-linking density of the cured epoxy resin. That is, a monofunctional epoxy can greatly reduce the rubbery state elastic modulus and improve the tensile strength translation rate of the molded article. Meanwhile, generally, a monofunctional epoxy resin is slow to gelate and takes time to cure since it suppresses the formation of a network. In addition, a monofunctional epoxy resin lowers the heat resistance of the cured resin. The reason why the constituent element [A] suppresses the slowdown of the curing speed is unknown. However, it is presumably because the steric hindrance group of the constituent element [A] interferes with the network during the curing to form pseudo cross-linkage, so that the slowdown of the curing speed observed in an ordinary monofunctional epoxy resin is suppressed. As a result, it becomes possible to achieve both an appropriate curing speed and a low rubbery state elastic modulus, and to provide a fiber reinforced material that exhibits high tensile strength translation rate in a usual curing process.

More specifically, in the epoxy resin composition according to the third preferable aspect of the present invention, the lower the rubbery state elastic modulus is, the higher the tensile strength translation rate of the fiber reinforced material is, and accordingly the problem of slowdown of the curing speed is also overcome.

The gel time in the present invention is a time measured by weighing 2 mL of the epoxy resin composition, measuring the curing behavior with a rotorless cure meter (Curelastometer V-type, manufactured by Nichigo Shoji) under the conditions of a measurement temperature of 80°C, a sinusoidal wave as a vibration waveform, a number of vibration of 100 cpm, and an amplitude angle of ±1°, and determining the time until the torque value of the epoxy resin composition reaches 0.02 N·m.

In the epoxy resin composition according to the third preferable aspect of the present invention, the cured product of the epoxy resin composition preferably has a compression shear strength in a compression test of 50 to 120 MPa. A compression shear strength within this range is preferable because the interlayer shear fracture of the fiber reinforced material made from the epoxy resin composition is suppressed. In particular, in a pressure vessel made from a fiber reinforced material, a compression shear strength within such a range is preferable because the interlayer shear fracture between the helical layer and the hoop layer is suppressed.

Herein, the compression shear strength is a value obtained by cutting a test piece having a thickness of 6 mm, a width of 6 mm, and a length of 6 mm from a cured epoxy resin, carrying out a compression test at a test speed of 1.0 mm/min with a universal testing machine, measuring the compressive yield stress according to JIS K 7181 (1994), and dividing the compressive yield stress by 2.

In the epoxy resin composition of the present invention, the constituent element [A] is preferably a phenyl glycidyl ether substituted with a tert-butyl group or a sec-butyl group. Since a tert-butyl group or a sec-butyl group as a substituent tends to interfere with the epoxy network and has a great effect as a steric hindrance group, a cured product having a lower rubbery state elastic modulus is easily obtained, and a fiber reinforced material having higher tensile strength translation rate is easily obtained.

In the epoxy resin composition of the present invention, the constituent element [C] is preferably the constituent element [c1]. The acid anhydride hardener as the constituent element [c1] is preferable because it achieves the low viscosity of the epoxy resin composition and the heat resistance of the cured resin in a well-balanced manner.

Examples of the acid anhydride hardener include methyltetrahydrophthalic anhydride, hexahydrophthalic anhydride, methylhexahydrophthalic anhydride, tetrahydrophthalic anhydride, methyl endomethylene tetrahydrophthalic anhydride, endomethylene tetrahydrophthalic anhydride, methyl bicycloheptane dicarboxylic anhydride, bicycloheptane dicarboxylic anhydride, maleic anhydride, and succinic anhydride.

In the epoxy resin composition of the present invention, the constituent element [c1] preferably includes a compound having a norbornene backbone or a norbornane backbone. In the epoxy resin composition according to the first preferable aspect of the present invention, an acid anhydride having a norbornene backbone or a norbornane backbone is suitably used from the viewpoint that the backbone having steric effects largely interferes with the molecular chain, and a cured product of the epoxy resin composition that achieves a good balance between cure shrinkage rate and tensile strength translation rate as well as excellent heat resistance is obtained. In the epoxy resin composition according to the second preferable aspect of the present invention, an acid anhydride having a norbornene backbone or a norbornane backbone is suitably used from the viewpoint that the backbone having steric effects largely interferes with the molecular chain, and a cured product of the epoxy resin composition that has lower rubbery state elastic modulus and low tensile elongation is obtained. In the epoxy resin composition according to the third preferable aspect of the present invention, an acid anhydride having a norbornene backbone or a norbornane backbone is preferable because the backbone having steric effects largely interferes with the molecular chain, and a fiber reinforced material that is better in the balance between curing speed and tensile strength translation rate is obtained. Specific examples of the acid anhydride having a norbornene backbone or a norbornane backbone include methyl endomethylene tetrahydrophthalic anhydride, endomethylene tetrahydrophthalic anhydride, methyl bicycloheptane dicarboxylic anhydride, and bicycloheptane dicarboxylic anhydride.

When an acid anhydride is used as a hardener, an accelerator is generally used in combination. As the accelerator, an imidazole compound, a 1,8-diazabicyclo[5.4.0]-7-undecene (hereinafter referred to as DBU) salt, a tertiary amine compound, a Lewis acid and the like are used. Among these, the epoxy resin composition of the present invention preferably contains an imidazole compound or a tertiary amine compound as an accelerator. Such an accelerator is preferably used because it is high in reactivity and excellent in productivity. Examples of the imidazole compound include 2-ethyl-4-methylimidazole and 1-cyanoethyl-2-ethyl-4-methylimidazole. Examples of the tertiary amine compound include dimethylbenzylamine and tris(dimethylaminomethyl)phenol.

In the epoxy resin composition of the present invention, the constituent element [C] preferably includes the constituent element [c2], which is a cycloalkyldiamine having a substituent on a carbon atom adjacent to a carbon atom having an amino group. In the epoxy resin composition according to the first preferable aspect of the present invention, use of a cycloalkyldiamine having a substituent on a carbon atom adjacent to a carbon atom having an amino group is preferable because the combination of this constituent element with the constituent elements [A] and [b1] or [b2] increases the polymer confinement due to steric effects, and a fiber reinforced material excellent in the balance between cure shrinkage rate and tensile strength translation rate as well as in heat resistance can be obtained. In the epoxy resin composition according to the second preferable aspect of the present invention, use of a cycloalkyldiamine having a substituent on a carbon atom adjacent to a carbon atom having an amino group is preferable because the combination of this constituent element with the constituent elements [A] and [b1] or [b2] increases the polymer confinement due to steric effects, and a fiber reinforced material more excellent in the tensile strength translation rate and interlaminar shear strength after the wet heat treatment can be obtained. In the epoxy resin composition according to the third preferable aspect of the present invention, use of a cycloalkyldiamine having a substituent on a carbon atom adjacent to a carbon atom having an amino group is preferable because the combination of this constituent element with the constituent elements [A] and [b1] or [b2] increases the polymer confinement due to steric effects, and a fiber reinforced material better in the balance between curing speed and tensile strength translation rate can be obtained. Specific examples of such a hardener include 2,2'-dimethyl-4,4'-methylenebiscyclohexylamine.

These aliphatic amine hardeners as the constituent element [c2] may be used singly or in combination.

In the epoxy resin composition of the present invention, the constituent element [C] preferably further includes an aliphatic polyamine having an alkylene glycol structure as the constituent element [c2]. The combination of a cycloalkyldiamine having a substituent on a carbon atom adjacent to a carbon atom having an amino group with an aliphatic polyamine having an alkylene glycol structure is preferable because this combination makes it easier to improve the balance between the viscosity of the epoxy resin composition and the rubbery state elastic modulus of the cured product, and to improve the tensile strength translation rate of the fiber reinforced material. Examples of the alkylene glycol structure include polyoxyethylene, polyoxypropylene, and copolymers of polyoxyethylene and polyoxypropylene. Among them, an aliphatic polyamine having an amino group at the terminal is suitably used because such an aliphatic polyamine is excellent in reactivity with an epoxy resin, easily incorporated into a network with an epoxy resin, and improves the tensile strength translation rate of the fiber reinforced material. Examples of the aliphatic polyamine having an amino group at the terminal include aliphatic polyamines having a 2-aminopropyl ether structure, a 2-aminoethyl ether structure, or a 3-aminopropyl ether structure.

In the epoxy resin composition of the present invention, the constituent element [C] preferably further includes isophoronediamine as part of the constituent element [c2]. Addition of isophoronediamine in addition to a cycloalkyldiamine having a substituent on a carbon atom adjacent to a carbon atom having an amino group makes it easier to obtain a fiber reinforced material having high tensile strength translation rate and improves the process stability. This is because the addition of isophoronediamine suppresses the phenomenon of salt formation by the amine in the resin bath with carbon dioxide in the air (Amine Blush), and improves the process stability.

These aliphatic amine hardeners as the constituent element [c2] can be used in combination with components other than those described above.

The total amount of the constituent element [C] is preferably 0.6 to 1.2 equivalents in terms of the active hydrogen equivalent or the acid anhydride equivalent based on the epoxy groups of all the epoxy resin components contained in the epoxy resin composition. When the total amount of the constituent element [C] is set within this range, a cured resin capable of providing a fiber reinforced material excellent in the balance between heat resistance and mechanical properties of material can be easily obtained.

The rubbery state elastic modulus in the present invention is obtained by cutting a test piece having a thickness of 2 mm, a width of 12.7 mm, and a length of 45 mm from the cured product of the epoxy resin composition, carrying out DMA measurement under the conditions of a torsional vibration frequency of 1.0 Hz and a temperature ramp rate of 5.0°C/min in the temperature range of 30 to 250°C using a viscoelasticity measuring device (ARES, manufactured by TA Instruments Inc.), and reading the glass transition temperature and the rubbery state elastic modulus. The glass transition temperature is the temperature at the intersection between the tangent in the glass state and the tangent in the transition state in the storage elastic modulus G' curve. The rubbery state elastic modulus is a storage elastic modulus in a region in which the storage elastic modulus is flat in a temperature region above the glass transition temperature. Herein, the storage elastic modulus at a temperature 40°C above the glass transition temperature is employed.

The glass transition temperature of a cured product of the epoxy resin composition is preferably set to 95°C or higher, because distortion of the fiber reinforced material and deterioration of mechanical properties caused by the deformation can be suppressed, and a fiber reinforced material excellent in environmental resistance can be obtained.

The conditions for curing the epoxy resin composition of the present invention are not particularly limited, and are appropriately selected according to the properties of the hardener.

The epoxy resin composition of the present invention is suitably used in a fiber reinforced material produced by a liquid process such as pultrusion or filament winding. The epoxy resin composition needs to be in a liquid form in order to improve the impregnating property into the reinforcing fiber bundle. Specifically, the epoxy resin composition of the present invention preferably has a viscosity at 25°C of 2000 mPa·s or less. When the viscosity is within this range, the reinforcing fiber bundle can be impregnated with the epoxy resin composition without requiring a special heating mechanism in the resin bath or dilution with an organic solvent or the like.

The viscosity is more preferably 200 to 1000 mPa·s. When the viscosity is set within this range, it is possible to suppress dripping of the resin during the molding process and to further improve the impregnating property of the epoxy resin composition into the reinforcing fiber bundle.

The viscosity and thickening ratio in the present invention are measured with an E-type viscometer (manufactured by Toki Sangyo Co., Ltd., TVE-30H) equipped with a standard cone rotor (1° 34' × R24) under the conditions of a measurement temperature of 25°C and a rotation speed of 50 revolutions/min according to "Method for measuring viscosity by cone-plate type rotational viscometer" in JIS Z 8803 (1991). The initial viscosity is the viscosity after 5 minutes from the start of measurement. In the present invention, the simple wording "viscosity" refers to the initial viscosity. The thickening ratio is a value obtained by dividing the viscosity after 90 minutes at 25°C by the initial viscosity.

The epoxy resin composition of the present invention preferably has a thickening ratio after 90 minutes at 25°C of 4 times or less. The thickening ratio is an index of the pot life of the epoxy resin composition. When the thickening ratio is within this range, the mass of the epoxy resin composition picked up by the reinforcing fiber can be stabilized in the pultrusion or filament winding.

The epoxy resin composition of the present invention may contain a thermoplastic resin as long as the effect of the present invention is not impaired. The thermoplastic resin may be a thermoplastic resin soluble in an epoxy resin, organic particles such as rubber particles and thermoplastic resin particles, or the like.

Examples of the thermoplastic resin soluble in an epoxy resin include polyvinyl acetal resins such as polyvinyl formal and polyvinyl butyral, polyvinyl alcohols, phenoxy resins, polyamides, polyimides, polyvinyl pyrrolidone, and polysulfones.

Examples of the rubber particles include cross-linked rubber particles, and core shell rubber particles obtained by graft-polymerizing a heterogeneous polymer onto the surface of cross-linked rubber particles.

In preparing the epoxy resin composition of the present invention, for example, the components may be kneaded using a machine such as a planetary mixer or a mechanical stirrer, or the components may be mixed by hand using a beaker and a spatula.

The fiber reinforced material of the present invention is made from a cured product of the epoxy resin composition of the present invention and a reinforcing fiber. The fiber reinforced material of the present invention that contains a cured product of the epoxy resin composition of the present invention as a matrix resin can be obtained by integrating the epoxy resin composition of the present invention prepared by the above-mentioned method with a reinforcing fiber, followed by curing the epoxy resin composition.

The reinforcing fiber used in the present invention is not particularly limited, and a glass fiber, a carbon fiber, an aramid fiber, a boron fiber, an alumina fiber, a silicon carbide fiber and the like can be used. Two or more of these fibers may be used as a mixture. Of these, a carbon fiber is preferably used because it can provide a light and stiff fiber reinforced material.

The epoxy resin composition of the present invention can be suitably used in pultrusion and filament winding. The pultrusion is a molding method of making a resin to adhere to a roving of a reinforcing fiber, and continuously curing the resin while passing the roving through a mold to give a molded article. The filament winding is a molding method of winding a reinforcing fiber on a mandrel or a liner with a resin being adhered to the reinforcing fiber, and curing the resin to give a molded article. In either method, the prepared epoxy resin composition of the present invention can be put in a resin bath and used.

The fiber reinforced material made from the epoxy resin composition of the present invention is preferably used in pressure vessels, propeller shafts, drive shafts, electric cable core materials, structures of moving bodies such as automobiles, ships, and railway vehicles, and cable applications.

The epoxy resin composition according to the first preferable aspect of the present invention is suitably used in the production of a molded article, in particular, the production of a pultrusion-molded article by pultrusion. In general, an epoxy resin composition has a smaller cure shrinkage rate than an unsaturated polyester resin or a phenol resin does. Accordingly, an epoxy resin composition has a problem that the cured resin causes large friction with the inner wall of the mold, resin sludge is deposited at the outlet of the mold, yarn breakage occurs due to the increase of the pultrusion force, and thus the epoxy resin composition is poor in moldability. An epoxy resin composition also has a problem that streaky blurs are generated on the surface of the molded article due to the deposition of the sludge, and the mechanical properties of material and appearance of the molded article are deteriorated. However, the epoxy resin composition according to the first preferable aspect of the present invention is preferable because it has an appropriate cure shrinkage rate while being an epoxy resin composition, is excellent in moldability, and provides a pultrusion-molded article excellent in mechanical properties of material and appearance.

The epoxy resin composition according to the second or third preferable aspect of the present invention is suitably used in the production of a molded article by filament winding and the production of a pressure vessel. In general, a monofunctional epoxy resin greatly reduces the viscosity of a resin composition and improves workability in filament winding molding or the like. However, since a monofunctional epoxy resin serves as a crosslinking terminal, it slowly thickens in the curing process, and as a result, causes problems that the curing time is greatly prolonged and the obtained molded article is deteriorated in heat resistance. However, the epoxy resin composition according to the third preferable aspect of the present invention is preferable because it contains a specific monofunctional epoxy resin and thus has an appropriate gel time, and provides a molded article excellent in moldability and heat resistance.

The molded article of the present invention is made from a fiber reinforced material made from a cured product of the epoxy resin composition of the present invention and a reinforcing fiber.

The pressure vessel according to the first aspect of the present invention is made from a fiber reinforced material made from a cured product of the epoxy resin composition of the present invention and a reinforcing fiber. The pressure vessel according to the first aspect of the present invention is preferable because it has high tensile strength translation rate and exhibits a great weight reduction effect.

A fiber reinforced material, a molded article, and a pressure vessel, which are made from a cured product of the epoxy resin composition according to the first preferable aspect of the present invention and a reinforcing fiber, are preferable because they have high tensile strength translation rate while having a certain cure shrinkage rate.

A fiber reinforced material, a molded article, and a pressure vessel, which are made from a cured product of the epoxy resin composition according to the second preferable aspect of the present invention and a reinforcing fiber, are preferable because they have high tensile strength translation rate and high interlaminar shear strength after the wet heat treatment, and are excellent in heat resistance.

A fiber reinforced material, a molded article, and a pressure vessel, which are made from a cured product of the epoxy resin composition according to the third preferable aspect of the present invention and a reinforcing fiber, are preferable because they can be molded in a usual curing process and have high tensile strength translation rate.

The pressure vessel according to the second aspect of the present invention is a pressure vessel including a liner and a fiber reinforced material layer covering the liner, wherein the fiber reinforced material layer is made from a fiber reinforced material containing a cured product of a thermosetting resin composition and a reinforcing fiber, the fiber reinforced material has a glass transition temperature of 95°C or higher, and the pressure vessel has a strain translation rate of 85% or more.

The pressure vessel according to the second aspect of the present invention exhibits a great weight reduction effect owing to the strain translation rate of 85% or more. The strain translation rate is determined in a burst test of a pressure vessel and is expressed as: burst strain/strand breaking strain of reinforcing fiber × 100. A high value of the strain translation rate indicates that the performance of the reinforcing fiber is utilized more effectively, and it can be said that the pressure vessel exhibits a great weight reduction effect.

In addition, when the glass transition temperature of the fiber reinforced material forming the fiber reinforced material layer is 95°C or higher, it is possible to suppress the distortion and deformation of the pressure vessel due to the load generated at the time of filling and pressure discharge of a high-pressure gas as well as to suppress the reduction of the pressure resistance caused by the distortion and deformation. Herein, the glass transition temperature of the fiber reinforced material is measured according to the method described in <Measurement of glass transition temperature of pressure vessel> described later.

In the pressure vessel according to the second aspect of the present invention, the cured product of the thermosetting resin composition preferably has a rubbery state elastic modulus obtained by a dynamic viscoelasticity evaluation of 10 MPa or less. When the rubbery state elastic modulus is set within this range, the obtained pressure vessel has high strain translation rate. Furthermore, use of a thermosetting resin composition having a rubbery state elastic modulus within the above-mentioned range is preferable because it is possible to obtain a pressure vessel that is excellent in productivity and that exhibits high strain translation rate without using, in the production of the pressure vessel, a step of changing the resins of the hoop layer and the helical layer, or a technique of controlling the thickness of the prepreg to a certain level.

Furthermore, in the pressure vessel according to the second aspect of the present invention, the thermosetting resin composition is an epoxy resin composition including the following constituent elements [A] to [C], the constituent element [B] be the following constituent element [b1] or [b2], and the constituent element [C] be at least one hardener selected from the group consisting of the following constituent elements [c1] [c2]:
[A] a phenyl glycidyl ether substituted with a tert-butyl group, a sec-butyl group, an isopropyl group, or a phenyl group;
[B] a bifunctional or higher functional aromatic epoxy resin:
   [b1] an optionally substituted diglycidyl aniline; or
   [b2] tetraglycidyl diaminodiphenylmethane; and
[C] a hardener:
   [c1] an acid anhydride hardener, wherein the epoxy resin composition comprises an imidazole compound or a tertiary amine compound as an accelerator; and
   [c2] an aliphatic amine hardener.

The above-mentioned formulation of the thermosetting resin composition makes it easy to provide a pressure vessel excellent in the balance between strain translation rate and heat resistance.

The phenyl glycidyl ether substituted with a tert-butyl group, a sec-butyl group, an isopropyl group, or a phenyl group, which is the constituent element [A] of the pressure vessel according to the second aspect of the present invention, is suitably used for providing a pressure vessel having high strain translation rate and excellent in heat resistance. Examples of such an epoxy resin include p-tert-butyl phenyl glycidyl ether, p-isopropyl phenyl glycidyl ether, p-sec-butyl phenyl glycidyl ether, and o-phenylphenol glycidyl ether.

The combination of the constituent element [B] with the constituent element [A] in the pressure vessel according to the second aspect of the present invention makes the obtained pressure vessel have high strain translation rate and excellent in heat resistance. The constituent element [B] is the following constituent element [b1] or [b2].

The constituent element [b1] is an optionally substituted diglycidyl aniline. Examples of the substituent include an alkyl group having a carbon number of 1 to 4, a phenyl group, and a phenoxy group. An alkyl group having a carbon number of 1 to 4 is preferable because it suppresses the viscosity increase of the epoxy resin. Examples of such an epoxy resin include diglycidyl aniline, diglycidyl toluidine, and N,N-diglycidyl-4-phenoxyaniline.

The constituent element [b2] is tetraglycidyl diaminodiphenylmethane.

The epoxy resin composition used in the pressure vessel according to the second aspect of the present invention may contain an epoxy resin other than the constituent elements [A], [b1], and

[b2] as long as the effect of the present invention is not impaired, in particular, as long as the viscosity is within a tolerable range. The epoxy resin other than the constituent elements [A], [b1], and [b2] is suitably used because such an epoxy resin can adjust the balance among mechanical properties of material, heat resistance, and impact resistance, and the process compatibility such as viscosity depending on the intended use.

Examples of the epoxy resin other than the constituent elements [A], [b1], and [b2] include bisphenol A epoxy resin, bisphenol F epoxy resin, bisphenol S epoxy resin, biphenyl epoxy resin, naphthalene epoxy resin, aminophenol epoxy resin, phenol novolac epoxy resin, an epoxy resin containing a dicyclopentadiene backbone, a phenyl glycidyl ether epoxy resin other than the constituent element [A], and a reactive diluent having an epoxy group. These may be used singly or in combination of plural kinds.

The constituent element [C] in the pressure vessel according to the second aspect of the present invention is at least one hardener selected from the group consisting of the following constituent elements [c1] and [c2]:
[c1] an acid anhydride hardener, wherein the epoxy resin composition comprises an imidazole compound or a tertiary amine compound as an accelerator; and
[c2] an aliphatic amine hardener.

The acid anhydride hardener of the constituent element [c1] is a compound having one or more acid anhydride groups in the molecule. Examples of the acid anhydride hardener include methyltetrahydrophthalic anhydride, hexahydrophthalic anhydride, methylhexahydrophthalic anhydride, tetrahydrophthalic anhydride, methylnadic anhydride, maleic anhydride, and succinic anhydride.

The amine hardeners of the constituent element [c2] are each a compound having one or more primary or secondary amino groups in the molecule.

Examples of the aliphatic amine hardener of the constituent element [c2] include isophoronediamine, diethylenetriamine, triethylenetetramine, hexamethylenediamine, N-aminoethylpiperazine, 4,4'-methylenebiscyclohexylamine, 2,2'-dimethyl-4,4'-methylenebiscyclohexylamine, cyclohexanediamine, 1,3-bisaminomethylcyclohexane, and an aliphatic polyamine having an alkylene glycol structure.

As for the pressure vessel according to the second aspect of the present invention, it was found that the lower the rubbery state elastic modulus is, the higher the strain translation rate of the pressure vessel is, where the rubbery state elastic modulus is obtained by the dynamic viscoelasticity evaluation of a cured product of the used epoxy resin composition. Furthermore, use of the constituent elements [A], [b1] or [b2], and [C] in the pressure vessel according to the second aspect of the present invention is preferable because an epoxy resin composition excellent in the balance between rubbery state elastic modulus and glass transition temperature can be obtained.

Herein, the rubbery state elastic modulus is an index having a correlation with the cross-linking density. In general, the lower the cross-linking density is, the lower the rubbery state elastic modulus is. Both the rubbery state elastic modulus and the glass transition temperature are indices related to the cross-linking density of the cured epoxy resin. When the rubbery state elastic modulus is high, the cross-linking density is high, and the glass transition temperature is also high. On the other hand, when the rubbery state elastic modulus is low, the cross-linking density is low, and the glass transition temperature is also low. As for the pressure vessel according to the second aspect of the present invention, it was found that the lower the rubbery state elastic modulus is, that is, the lower the cross-linking density is, the higher the strain translation rate of the pressure vessel is, and the problem of low heat resistance is also overcome. More specifically, although the rubbery state elastic modulus and the glass transition temperature are generally in a trade-off relationship, in the pressure vessel according to the second aspect of the present invention, use of the constituent elements [A], [b1] or [b2], and [C] overcomes this trade-off relationship, and provides a liquid epoxy resin composition capable of providing a pressure vessel having high strain translation rate and excellent in heat resistance.

The reason why the combination of the constituent elements [A], [b1] or [b2], and [C] achieves both heat resistance and low rubbery state elastic modulus is unknown. However, it is presumably because the substituent of the constituent element [A], having potent steric effects, interferes with the curing reaction of the constituent element [C], so that the cured product has the covalent cross-linkage and the polymer confinement due to steric effects in a well-balanced manner. In the cured epoxy resin composition, the aromatic ring of the constituent element [b1], as steric effects, interferes with the substituent of the constituent element [A] such as the tert-butyl group or the isopropyl group, and restricts the movement of the molecular chain. As a result, even if the cured epoxy resin composition is low in density of covalent cross-linkage, the cured epoxy resin composition exhibits high heat resistance. In general, the constituent element [b2] is a component that increases the cross-linking density to improve the heat resistance. However, when the constituent element [b2] is used in combination with the constituent element [A], part of the epoxy resin is affected by steric effects and remains unreacted, and serves as additional steric effects. Thus, movement of the molecular chain is restricted in a state where the cross-linking density is low as in the case of the constituent element [b1]. That is, the cured epoxy resin obtained by curing the combination of the constituent elements [A], [b1] or [b2], and [C] achieves both a low rubbery state elastic modulus and a high glass transition temperature. Furthermore, as the movement of the molecular chain is restricted, molecular strain hardly occurs, and the pressure vessel is resistant to the repeated load. That is, use of the epoxy resin composition as a matrix resin makes it possible to provide a pressure vessel excellent in heat resistance and having high strain translation rate, and the pressure vessel is excellent in weight reduction effect and pressure resistance.

In the pressure vessel according to the second aspect of the present invention, the constituent element [B] preferably includes the constituent elements [b1] and [b2] simultaneously. When the constituent element [B] includes the constituent elements [b1] and [b2] simultaneously, a pressure vessel that is excellent in productivity and is better in the balance between strain translation rate and heat resistance can be obtained.

In the pressure vessel according to the second aspect of the present invention, the constituent element [A] is preferably a phenyl glycidyl ether substituted with a tert-butyl group or a sec-butyl group. Since a tert-butyl group or a sec-butyl group as a substituent tends to interfere with the epoxy network and has a great effect as a steric hindrance group, a cured product having a lower rubbery state elastic modulus is easily obtained, and a pressure vessel having higher strain translation rate is easily obtained.

In the pressure vessel according to the second aspect of the present invention, the constituent element [C] is preferably the constituent element [c1]. The acid anhydride hardener as the constituent element [c1] is preferable because it achieves the low viscosity of the epoxy resin composition and the heat resistance of the cured resin in a well-balanced manner.

In the pressure vessel according to the second aspect of the present invention, the constituent element [c1] preferably includes a compound having a norbornene backbone or a norbornane backbone. In the pressure vessel according to the second aspect of the present invention, an acid anhydride having a norbornene backbone or a norbornane backbone is preferable because steric effects produced by the backbone increase the polymer confinement, and a pressure vessel more excellent in heat resistance and having higher strain translation rate can be obtained. Specific examples of the acid anhydride having a norbornene backbone or a norbornane backbone include methyl endomethylene tetrahydrophthalic anhydride, endomethylene tetrahydrophthalic anhydride, methyl bicycloheptane dicarboxylic anhydride, and bicycloheptane dicarboxylic anhydride.

When an acid anhydride is used as a hardener, an accelerator is generally used in combination. As the accelerator, an imidazole compound, a DBU salt, a tertiary amine compound, a Lewis acid and the like are used. Among these, the pressure vessel according to the second aspect of the present invention preferably contains an imidazole compound or a tertiary amine compound as an accelerator. Such an accelerator is preferably used because it is high in reactivity and excellent in productivity. Examples of the imidazole compound include 2-ethyl-4-methylimidazole and 1-cyanoethyl-2-ethyl-4-methylimidazole. Examples of the tertiary amine compound include dimethylbenzylamine and tris(dimethylaminomethyl)phenol.

In the pressure vessel according to the second aspect of the present invention, the constituent element [C] preferably includes the constituent element [c2], as disclosed in claim 15, which is a cycloalkyldiamine having a substituent on a carbon atom adjacent to a carbon atom having an amino group. In the pressure vessel according to the second aspect of the present invention, the constituent element [C] preferably includes a constituent element [c3], which is an aromatic diamine having a substituent on an ortho position of an amino group. In the pressure vessel according to the second aspect of the present invention, use of an aromatic diamine having a substituent on an ortho position of an amino group, or a cycloalkyldiamine having a substituent on a carbon atom adjacent to a carbon atom having an amino group is preferable because the combination of this constituent element with the constituent elements [A] and [B] increases the polymer confinement due to steric effects, and a pressure vessel more excellent in heat resistance and having higher strain translation rate can be obtained. Specific examples of such a hardener include diethyltoluenediamine, 4,4'-diamino-3,3'-diethyldiphenylmethane, 4,4'-diamino-3,3'-dimethyldiphenylmethane, 4,4'-diamino-3,3',5,5'-tetramethyldiphenylmethane, 4,4'-diamino-3,3',5,5'-tetraethyldiphenylmethane, and 2,2'-dimethyl-4,4'-methylenebiscyclohexylamine. Among them, 2,2'-dimethyl-4,4'-methylenebiscyclohexylamine or diethyltoluenediamine is preferable.

These amine hardeners are used in combination.

In the pressure vessel according to the second aspect of the present invention, the constituent element [C] preferably further includes an aliphatic polyamine having an alkylene glycol structure as part of the constituent element [c2]. The combination of an aromatic diamine having a substituent on an ortho position of an amino group or a cycloalkyldiamine having a substituent on a carbon atom adjacent to a carbon atom having an amino group with an aliphatic polyamine having an alkylene glycol structure is more preferable from the viewpoint of the balance between the viscosity of the epoxy resin composition, and heat resistance and strain translation rate of the pressure vessel. Examples of the alkylene glycol structure include polyoxyethylene, polyoxypropylene, and copolymers of polyoxyethylene and polyoxypropylene. Among them, an aliphatic polyamine having an amino group at the terminal is suitably used because such an aliphatic polyamine is excellent in reactivity with an epoxy resin, easily incorporated into a network with an epoxy resin, and improves the strain translation rate of the pressure vessel. Examples of the aliphatic polyamine having an amino group at the terminal include aliphatic polyamines having a 2-aminopropyl ether structure, a 2-aminoethyl ether structure, or a 3-aminopropyl ether structure.

In the pressure vessel according to the second aspect of the present invention, the constituent element [C] preferably further includes isophoronediamine as the constituent element [c2]. Addition of isophoronediamine in addition to a cycloalkyldiamine having a substituent on a carbon atom adjacent to a carbon atom having an amino group is more preferable from the standpoint of obtaining a pressure vessel having high strain translation rate and improving the process stability. The addition of isophoronediamine suppresses the phenomenon of salt formation by the amine in the resin bath with carbon dioxide in the air (Amine Blush), and improves the process stability.

The total amount of the constituent element [C] is preferably 0.6 to 1.2 equivalents in terms of the active hydrogen equivalent or the acid anhydride equivalent based on the epoxy groups of all the epoxy resin components contained in the epoxy resin composition. When the total amount of the constituent element [C] is set within this range, a pressure vessel excellent in the balance between heat resistance and mechanical properties of material can be obtained.

In the pressure vessel according to the second aspect of the present invention, the thermosetting resin composition used is preferably in a liquid form in order to improve the impregnating property of the thermosetting resin composition into the reinforcing fiber bundle. Specifically, the thermosetting resin composition preferably has a viscosity at 25°C of 2000 mPa·s or less. When the viscosity is within this range, the reinforcing fiber bundle can be impregnated with the epoxy resin composition without requiring a special heating mechanism in the resin bath or dilution with an organic solvent or the like.

The pressure vessel according to the second aspect of the present invention may contain a thermoplastic resin as long as the effect of the present invention is not impaired. The thermoplastic resin may be a thermoplastic resin soluble in an epoxy resin, organic particles such as rubber particles and thermoplastic resin particles, or the like.

Examples of the thermoplastic resin soluble in an epoxy resin include polyvinyl acetal resins such as polyvinyl formal and polyvinyl butyral, polyvinyl alcohols, phenoxy resins, polyamides, polyimides, polyvinyl pyrrolidone, and polysulfones.

Examples of the rubber particles include cross-linked rubber particles, and core shell rubber particles obtained by graft-polymerizing a heterogeneous polymer onto the surface of cross-linked rubber particles.

In preparing the thermosetting resin composition used in the pressure vessel according to the second aspect of the present invention, for example, the components may be kneaded using a machine such as a planetary mixer or a mechanical stirrer, or the components may be mixed by hand using a beaker and a spatula.

The reinforcing fiber used in the pressure vessel according to the second aspect of the present invention is not particularly limited, and a glass fiber, a carbon fiber, an aramid fiber, a boron fiber, an alumina fiber, a silicon carbide fiber and the like can be used. Two or more of these fibers may be used as a mixture. Of these, a carbon fiber is preferably used because it can provide a light and stiff fiber reinforced material.

The pressure vessel according to the second aspect of the present invention is preferably produced by filament winding. The filament winding is a molding method of winding a reinforcing fiber on a liner with a thermosetting resin composition being adhered to the reinforcing fiber, and curing the resin composition to give a molded article including a liner, and a fiber reinforced material layer that covers the liner and that is made from the fiber reinforced material containing the cured product of the thermosetting resin composition and the reinforcing fiber. For producing the pressure vessel, a metal liner or a liner made of a resin such as polyethylene or a polyamide is used, and a desired material can be appropriately selected. The liner shape can also be appropriately selected according to the desired shape of the pressure vessel.

The pressure vessel according to the second aspect of the present invention is suitably used in a high-pressure hydrogen tank of a fuel cell system, a high-pressure natural gas tank, an air respirator tank, and the like.

### EXAMPLES

Hereinafter, the present invention will be described more specifically with reference to examples, but the present invention is not limited to the description of these examples. Examples 15-17, 31, 32, 35, 37 to 39, 43 and 67 are not part of the invention.

The constituent elements used in the examples are as follows.

### <Materials used>

Constituent element [A]
- "EPIOL (registered trademark)" TB (p-tert-butyl phenyl glycidyl ether, manufactured by NOF CORPORATION)
- "Denacol (registered trademark)" EX-146 (p-tert-butyl phenyl glycidyl ether, manufactured by Nagase ChemteX Corporation)
- "EPIOL (registered trademark)" SB (p-sec-butyl phenyl glycidyl ether, manufactured by NOF CORPORATION)
- OPP-G (o-phenylphenol glycidyl ether, manufactured by SANKO CO., LTD.)
- "Denacol (registered trademark)" EX-142 (o-phenylphenol glycidyl ether, manufactured by Nagase ChemteX Corporation)

Constituent element [B]
- GAN (N,N-diglycidyl aniline, manufactured by Nippon Kayaku Co., Ltd.)
- GOT (N,N-diglycidyl orthotoluidine, manufactured by Nippon Kayaku Co., Ltd.)
- Px-GAN (N,N-diglycidyl-4-phenoxyaniline, manufactured by Toray Fine Chemicals Co., Ltd.)
- "SUMI-EPOXY (registered trademark)" ELM434 (N,N,N',N'-tetraglycidyl-4,4'-diaminodiphenylmethane, manufactured by Sumitomo Chemical Co., Ltd.)
- "OGSOL (registered trademark)" PG-100 (fluorene epoxy resin, manufactured by Osaka Gas Chemicals Co., Ltd.)
- "OGSOL (registered trademark)" EG-200 (fluorene epoxy resin, manufactured by Osaka Gas Chemicals Co., Ltd.)
- "Araldite (registered trademark)" MY0500 (triglycidyl-p-aminophenol, manufactured by Huntsman Japan KK)
- "Araldite (registered trademark)" MY0610 (triglycidyl-m-aminophenol, manufactured by Huntsman Japan KK)
- "SUMI-EPOXY (registered trademark)" ELM-100 (triglycidyl-p-aminocresol, manufactured by Sumitomo Chemical Co., Ltd.)
- "TETRAD (registered trademark)"-X (N,N,N',N'-tetraglycidyl-m-xylenediamine, manufactured by MITSUBISHI GAS CHEMICAL COMPANY, INC.)
- "jER (registered trademark)" 828 (liquid bisphenol A epoxy resin, manufactured by Mitsubishi Chemical Corporation)
- "jER (registered trademark)" 1001 (solid bisphenol A epoxy resin, manufactured by Mitsubishi Chemical Corporation)
- "jER (registered trademark)" 806 (liquid bisphenol F epoxy resin, manufactured by Mitsubishi Chemical Corporation)
- "jER (registered trademark)" 830 (liquid bisphenol F epoxy resin, manufactured by Mitsubishi Chemical Corporation)
- "Araldite (registered trademark)" PY306 (liquid bisphenol F epoxy resin, manufactured by Huntsman Japan KK)
- NC-7300L (naphthalene novolac epoxy resin, manufactured by Nippon Kayaku Co., Ltd.)

Constituent element [C]
- "Baxxodur (registered trademark)" EC201 (isophoronediamine, manufactured by BASF Japan Ltd.)
- "Baxxodur (registered trademark)" EC331 (2,2'-dimethyl-4,4'-methylenebiscyclohexylamine, manufactured by BASF Japan Ltd.)
- XTA-801 (1,4-bis(aminomethyl)cyclohexane, manufactured by Huntsman Japan KK)
- "JEFFAMINE (registered trademark)" D-230 (polypropylene glycol diamine, manufactured by Huntsman Japan KK)
- "JEFFAMINE (registered trademark)" D-400 (polypropylene glycol diamine, manufactured by Huntsman Japan KK)
- HN-2200 (methyltetrahydrophthalic anhydride, manufactured by Hitachi Chemical Co., Ltd.)
- "KAYAHARD (registered trademark)" MCD (a mixed liquid of methyl endomethylene tetrahydrophthalic anhydride and endomethylene tetrahydrophthalic anhydride (in the tables, referred to as "methylnadic anhydride" as a common name) manufactured by Nippon Kayaku Co., Ltd.)
- Dicyandiamide (dicyandiamide, manufactured by NIPPON CARBIDE INDUSTRIES CO., INC.)
- "Aradur (registered trademark)" 5200 (diethyltoluenediamine, manufactured by Huntsman Japan KK)
- "jER Cure (registered trademark)" W (diethyltoluenediamine, manufactured by Mitsubishi Chemical Corporation)
- 3,3'DAS (3,3'-diaminodiphenyl sulfone, manufactured by Mitsui Fine Chemicals, Inc.)
- "SEIKACURE-S (4,4'-diaminodiphenyl sulfone, manufactured by SEIKA CORPORATION)

Epoxy resin other than constituent elements [A] and [B]
- "Denacol (registered trademark)" EX-731 (N-glycidyl phthalimide, manufactured by Nagase ChemteX Corporation)
- "Denacol (registered trademark)" EX-141 (phenyl glycidyl ether, manufactured by Nagase ChemteX Corporation)
- YED216 (1,6-hexanediol diglycidyl ether, manufactured by Yuka Shell Epoxy Co., Ltd.)

Accelerator
- "KAOLIZER (registered trademark)" No. 20 (N,N-dimethylbenzylamine, manufactured by Kao Corporation)
- "U-CAT (registered trademark)" SA102 (2-ethylhexanoic acid salt of 1,8-diazabicyclo(5,4,0)undecene-7, manufactured by San-Apro Ltd.)
- "OMICURE (registered trademark)" 94 (3-phenyl-1,1-dimethylurea, manufactured by PTI JAPAN Corporation)
- "Curezol (registered trademark)" 2E4MZ (2-ethyl-4-methylimidazole, Shikoku Chemicals Corporation)
- "Curamid (registered trademark)" CN (2-ethyl-4-methyl-1H-imidazole-1-propanenitrile, manufactured by Borregaard)

### <Method for preparing epoxy resin composition>

The constituent elements [A] and [B] and, if necessary, other epoxy resins were charged into a beaker, and the contents were heated to 80°C and kneaded with heating for 30 minutes. Then, while the contents were continuously kneaded, the temperature was lowered to 30°C or lower, and the constituent element [C] and, if necessary, other hardeners and accelerators were added to the contents. The resulting mixture was stirred for 10 minutes to give an epoxy resin composition.

The compounding ratios of the components in each of the examples and comparative examples are shown in Tables 1 to 11.

### <Method for evaluating gel time of epoxy resin composition>

The gel time was obtained by weighing 2 mL of the epoxy resin composition, measuring the curing behavior with a rotorless cure meter (Curelastometer V-type, manufactured by Nichigo Shoji) under the conditions of a measurement temperature of 80°C, a sinusoidal wave as a vibration waveform, a number of vibration of 100 cpm, and an amplitude angle of ±1°, and determining the time until the torque value of the epoxy resin composition reached 0.02 N·m.

### <Method for producing cured resin>

The epoxy resin composition prepared according to <Method for preparing epoxy resin composition> was defoamed in a vacuum, and then cured in a mold set to have a thickness of 2 mm with a 2-mm thick "TEFLON (registered trademark)" spacer to give a plate-shaped cured resin having a thickness of 2 mm. As for the curing conditions, the following A or B was applied depending on the hardener used.
- Curing conditions A: Curing at 100°C for 2 hours, followed by curing at 150°C for 4 hours
- Curing conditions B: Curing at 80°C for 2 hours, followed by curing at 110°C for 4 hours

### <Method for measuring dynamic viscoelasticity of cured resin>

A test piece having a width of 12.7 mm and a length of 45 mm was cut from the cured resin obtained by <Method for producing cured resin>. DMA measurement was carried out in the temperature range of 30 to 250°C under the conditions of a torsional vibration frequency of 1.0 Hz and a temperature ramp rate of 5.0°C/min using a viscoelasticity measuring device (ARES, manufactured by TA Instruments Inc.), and the glass transition temperature and the rubbery state elastic modulus were read. The glass transition temperature is the temperature at the intersection between the tangent in the glass state and the tangent in the transition state in the storage elastic modulus G' curve. The rubbery state elastic modulus is a storage elastic modulus in a region in which the storage elastic modulus is flat in a temperature region above the glass transition temperature. Herein, the storage elastic modulus at a temperature 40°C above the glass transition temperature was employed.

### <Method for evaluating cure shrinkage rate of epoxy resin composition>

The specific gravities of an uncured epoxy resin composition and a cured epoxy resin composition were measured at 23°C according to method A (immersion method) of JIS K 7112 (1999).

The cure shrinkage rate of the epoxy resin composition was calculated according to the calculation formula: (specific gravity of cured epoxy resin composition - specific gravity of uncured epoxy resin composition) ÷ specific gravity of cured epoxy resin composition × 100.

### <Tensile test method of cured resin>

From the cured resin obtained by <Method for producing cured resin>, a small No. 1 (1/2) test piece was cut according to JIS K 7113 (1995), and the tensile elongation was measured with an Instron universal testing machine (manufactured by Instron Japan Co., Ltd.) at a cross-head speed of 1.0 mm/min. The average of measured values of samples (number of samples = 6) was taken as the tensile elongation.

### <Method for evaluating compression shear strength of cured resin>

The epoxy resin composition was defoamed in a vacuum, and then cured in a mold set to have a thickness of 6 mm with a 6-mm thick "TEFLON (registered trademark)" spacer at 80°C for 2 hours, and then at 110°C for 4 hours to give a plate-shaped cured resin having a thickness of 6 mm.

A test piece having a width of 6 mm and a length of 6 mm was cut from the obtained cured resin, and was subjected to a compression test at a test speed of 1.0 mm/min with an Instron universal testing machine (manufactured by Instron Japan Co., Ltd.). The compressive yield stress was measured according to JIS K 7181 (1994), and a value obtained by dividing the compressive yield stress by 2 was defined as the compression shear strength.

### <Method for producing fiber reinforced material - 1>

The epoxy resin composition prepared according to <Method for preparing epoxy resin composition> was impregnated into a carbon fiber "TORAYCA (registered trademark)" T700S-12K-50C (manufactured by Toray Industries, Inc., areal weight: 150 g/m²) arranged in one direction into a sheet shape at room temperature to give an epoxy resin-impregnated carbon fiber sheet. Then, 8 sheets were stacked so that the fiber filaments would be oriented in the same direction, and the resulting laminate was sandwiched between molds set to have a thickness of 1 mm with a metal spacer. The molds were subjected to thermal curing with a press heated to 80°C or 100°C for 2 hours. Then, the molds were taken out of the press, and further thermally cured in an oven heated to 110°C or 150°C for 4 hours to give a fiber reinforced material. As for the curing conditions, the following A or B was applied depending on the hardener used.
- Curing conditions A: Curing at 100°C for 2 hours, followed by curing at 150°C for 4 hours
- Curing conditions B: Curing at 80°C for 2 hours, followed by curing at 110°C for 4 hours

### <Method for producing fiber reinforced material - 2>

While a carbon fiber "TORAYCA (registered trademark)" T700S-12K-50C (manufactured by Toray Industries, Inc.) was impregnated with the epoxy resin composition prepared according to <Method for preparing epoxy resin composition>, the carbon fiber was wound around a frame at a certain tension enough to prevent sagging of the carbon fiber bundle, and was sandwiched between molds set to have a thickness of 6 mm with a metal spacer. The molds were subjected to thermal curing with a press heated to 80°C or 100°C for 2 hours. Then, the molds were taken out of the press, and further thermally cured in an oven heated to 110°C or 150°C for 4 hours to give a fiber reinforced material. As for the curing conditions, the following A or B was applied depending on the hardener used.
- Curing conditions A: Curing at 100°C for 2 hours, followed by curing at 150°C for 4 hours
- Curing conditions B: Curing at 80°C for 2 hours, followed by curing at 110°C for 4 hours

### <Measurement of tensile strength of fiber reinforced material>

From a fiber reinforced material produced according to <Method for producing fiber reinforced material - 1>, a test piece having a width of 12.7 mm and a length of 229 mm was cut, and a glass fiber-reinforced plastic tab of 1.2 mm, 50 mm in length was bonded to both ends of the test piece. The tensile strength of the test piece was measured with an Instron universal testing machine (manufactured by Instron Japan Co., Ltd.) at a cross-head speed of 1.27 mm/min according to ASTM D 3039. The average of measured values of samples (number of samples = 6) was taken as the tensile strength.

The tensile strength translation rate was calculated according to (tensile strength of fiber reinforced material)/(strand tensile strength of reinforcing fiber × fiber volume content) × 100.

The fiber volume content was measured according to ASTM D 3171, and the measured value was used.

### <Measurement of interlaminar shear strength of fiber reinforced material after wet heat treatment>

From a fiber reinforced material produced according to <Method for producing fiber reinforced material - 2>, a test piece having a width of 12.0 mm and a length of 36.0 mm was cut, and the test piece was immersed in boiling water at 98°C for 24 hours. The interlaminar shear strength of the test piece was measured with an Instron universal testing machine (manufactured by Instron Japan Co., Ltd.) at a cross-head speed of 1 mm/min according to ASTM D 2344. The average of measured values of samples (number of samples = 6) was taken as the interlaminar shear strength.

### <Measurement of glass transition temperature of fiber reinforced material>

A small piece (5 to 10 mg) was collected from a fiber reinforced material produced according to <Method for producing fiber reinforced material - 1>, and the intermediate point glass transition temperature (Tmg) was measured according to JIS K 7121 (1987). The measurement was carried out in a Modulated mode at a temperature ramp rate of 5°C/min under a nitrogen gas atmosphere using a differential scanning calorimeter DSC Q2000 (manufactured by TA Instruments Inc.).

### <Method for evaluating pultrusion moldability>

An epoxy resin composition prepared according to <Method for preparing epoxy resin composition> and a carbon fiber "TORAYCA (registered trademark)" T700S-12K-50C (manufactured by Toray Industries, Inc., areal weight: 150 g/m²) were subjected to continuous molding with a hot molding mold of a pultrusion molding machine heated to 110°C or 150°C. The pultrusion speed was set to 0.5 m/min, and the amount of the resin adhered to the mold outlet when a 700 m-long molded article was drawn after the start of pultrusion molding was evaluated as A, B, C, or D by sensory evaluation. An epoxy resin composition evaluated as A scarcely adhered to the mold outlet. An epoxy resin composition evaluated as B slightly adhered to the mold outlet. An epoxy resin composition evaluated as C adhered to the mold outlet, but there was no change in the pultrusion speed and the surface quality. An epoxy resin composition evaluated as D adhered to the mold outlet in a large amount, and the pultrusion speed slowed or streaky blurs generated on the surface of the molded article. An epoxy resin composition evaluated as C or a higher rank is capable of pultrusion molding. The curing temperature was selected according to the hardener used.

### <Method for producing pressure vessel>

A carbon fiber "TORAYCA (registered trademark)" T700S-12K-50C (manufactured by Toray Industries, Inc.) was impregnated with an epoxy resin composition prepared according to <Method for preparing epoxy resin composition> so that the carbon fiber would contain 29% by mass of the epoxy resin composition, and resin-impregnated carbon fiber was wound around an aluminum liner having a capacity of 7.5 L so as to produce four hoop layers, four helical layers, and two hoop layers. Then, the resultant was cured in an oven. The angles of the hoop layers and the helical layers relative to the longitudinal direction of the liner were 89.7° and 20°, respectively. As for the curing conditions, the following A or B was applied depending on the hardener used.
- Curing conditions A: Curing at 100°C for 2 hours, followed by curing at 150°C for 4 hours
- Curing conditions B: Curing at 80°C for 2 hours, followed by curing at 110°C for 4 hours

### <Measurement of strain translation rate of pressure vessel>

Strain gauges were attached to a pressure vessel produced according to <Method for producing pressure vessel> at six positions in the circumferential direction of the pressure vessel, and hydraulic pressure was applied to the inside of the pressure vessel to burst the pressure vessel. The strain at the time the pressure vessel bursted was read and regarded as the burst strain. The average of values of the strain gauges was taken as the burst strain.

The strain translation rate was calculated according to the formula: burst strain/strand breaking strain of reinforcing fiber × 100.

### <Measurement of glass transition temperature of pressure vessel>

A small piece (5 to 10 mg) was collected from a fiber reinforced material layer of a pressure vessel produced according to <Method for producing pressure vessel>, and the intermediate point glass transition temperature (Tmg) was measured according to JIS K 7121 (1987). The measurement was carried out in a Modulated mode at a temperature ramp rate of 5°C/min under a nitrogen gas atmosphere using a differential scanning calorimeter DSC Q2000 (manufactured by TA Instruments Inc.).

### (Example 1)

Using 60 parts by mass of OPP-G as the constituent element [A], 15 parts by mass of "SUMI-EPOXY (registered trademark)" ELM434 (constituent element [b2]) and 25 parts by mass of "jER (registered trademark)" 806 as the constituent element [B], 91.5 parts by mass of "KAYAHARD (registered trademark)" MCD (constituent element [c1]) as the constituent element [C], and 4 parts by mass of "U-CAT (registered trademark)" SA102 as an accelerator, an epoxy resin composition was prepared according to <Method for preparing epoxy resin composition>. The cure shrinkage rate of this epoxy resin composition was 3.8%.

The epoxy resin composition was cured under the "curing conditions B" to prepare a cured product, and the dynamic viscoelasticity was evaluated. As a result, the rubbery state elastic modulus was 3.5 MPa, and the epoxy resin composition was satisfactory in cure shrinkage rate and rubbery state elastic modulus. Furthermore, the glass transition temperature was 92°C, and the epoxy resin composition was also satisfactory in heat resistance.

A fiber reinforced material was produced from the obtained epoxy resin composition according to <Method for producing fiber reinforced material - 1> to give a fiber reinforced material having a fiber volume content of 67%. The tensile strength of the obtained fiber reinforced material was measured by the above-mentioned method, and the tensile strength translation rate was calculated. As a result, the tensile strength translation rate was 84%.

In the evaluation according to <Method for evaluating pultrusion moldability>, the epoxy resin composition adhered to the mold outlet, but there was no change in the pultrusion speed and the surface quality, and the epoxy resin composition was satisfactory in pultrusion moldability.

### (Examples 2 to 18)

Each epoxy resin composition, cured epoxy resin, and fiber reinforced material were produced by the same method as in Example 1 (except that the curing conditions were the curing conditions A or B shown in the tables) except that the resin formulation was changed as shown in Tables 1 and 2. All of the obtained cured epoxy resins showed satisfactory cure shrinkage rate and rubbery state elastic modulus. The tensile strength translation rate and pultrusion moldability of the obtained fiber reinforced materials were also satisfactory.

### (Example 19)

Using 25 parts by mass of "Denacol (registered trademark)" EX-146 as the constituent element [A], 25 parts by mass of GAN (constituent element [b1]) and 50 parts by mass of "jER (registered trademark)" 828 as the constituent element [B], 91 parts by mass of HN-2200 (constituent element [c1]) as the constituent element [C], and 2 parts by mass of "KAOLIZER (registered trademark)" No. 20 as an accelerator, an epoxy resin composition was prepared according to <Method for preparing epoxy resin composition>.

The epoxy resin composition was cured under the "curing conditions A" to prepare a cured product, and the dynamic viscoelasticity was evaluated. As a result, the rubbery state elastic modulus was 5.7 MPa. The cured product had a tensile elongation of 2.5%, and the balance between rubbery state elastic modulus and tensile elongation was satisfactory.

A fiber reinforced material was produced from the obtained epoxy resin composition according to <Method for producing fiber reinforced material - 1> to give a fiber reinforced material having a fiber volume content of 65%. The tensile strength of the obtained fiber reinforced material was measured by the above-mentioned method, and the tensile strength translation rate was calculated. As a result, the tensile strength translation rate was 80%. In addition, the glass transition temperature of the obtained fiber reinforced material was measured by the above-mentioned method. As a result, the glass transition temperature was 112°C, and the fiber reinforced material was also satisfactory in heat resistance.

### (Examples 20 to 37)

Each epoxy resin composition, cured epoxy resin, and fiber reinforced material were produced by the same method as in Example 19 (except that the curing conditions were the curing conditions A or B shown in the tables) except that the resin formulation was changed as shown in Tables 3 and 4. The evaluation results are shown in Tables 3 and 4. All of the obtained cured epoxy resins showed satisfactory rubbery state elastic modulus and tensile elongation. The tensile strength translation rate and glass transition temperature of the obtained fiber reinforced materials were also satisfactory.

As for Examples 21, 28, 31, and 33, a fiber reinforced material was produced according to <Method for producing fiber reinforced material - 2>, and the interlaminar shear strength after the wet heat treatment was measured by the above-mentioned method according to <Measurement of interlaminar shear strength of fiber reinforced material after wet heat treatment>. As a result, as shown in Table 14, all of the fiber reinforced materials showed a satisfactory value.

As for Examples 19 to 21, 25, 28, 31, 33, 35, and 36, a pressure vessel was produced according to <Method for producing pressure vessel>, and the strain translation rate and glass transition temperature were evaluated. The evaluation results are shown in Table 12. All of the pressure vessels showed satisfactory heat resistance and strain translation rate.

### (Example 38)

Using 20 parts by mass of "EPIOL (registered trademark)" SB as the constituent element [A], 80 parts by mass of "jER (registered trademark)" 828 as the constituent element [B], and 20.0 parts by mass of XTA-801 (constituent element [c2]) as the constituent element [C], an epoxy resin composition was prepared according to <Method for preparing epoxy resin composition>. The epoxy resin composition had a gel time at 80°C of 10 minutes.

The epoxy resin composition was cured under the "curing conditions B" to prepare a cured product, and the dynamic viscoelasticity was evaluated. As a result, the rubbery state elastic modulus was 8.8 MPa, and the epoxy resin composition was satisfactory in gel time and rubbery state elastic modulus. Furthermore, the glass transition temperature was 128°C, and the epoxy resin composition was also satisfactory in heat resistance.

A fiber reinforced material was produced from the obtained epoxy resin composition according to <Method for producing fiber reinforced material - 1> to give a fiber reinforced material having a fiber volume content of 66%. The tensile strength of the obtained fiber reinforced material was measured by the above-mentioned method, and the tensile strength translation rate was calculated. As a result, the tensile strength translation rate was 76%.

### (Examples 39 to 64)

Each epoxy resin composition, cured epoxy resin, and fiber reinforced material were produced by the same method as in Example 38 except that the resin formulation was changed as shown in Tables 5 to 7. All of the obtained cured epoxy resins showed satisfactory low-temperature short-time curability and rubbery state elastic modulus. The tensile strength translation rate of the obtained fiber reinforced materials was also satisfactory.

### (Example 65)

As for the resin formulation shown in Table 8, an epoxy resin composition was prepared according to <Method for preparing epoxy resin composition>.

From the obtained epoxy resin composition, a pressure vessel was produced according to <Method for producing pressure vessel>. The burst test of the obtained pressure vessel was carried out by the above-mentioned method, and the strain translation rate was calculated. As a result, the strain translation rate was 85%. In addition, the glass transition temperature of the obtained pressure vessel was measured. As a result, the glass transition temperature was 138°C, and the pressure vessel was satisfactory in strain translation rate and heat resistance.

Furthermore, the obtained epoxy resin composition was cured under the "curing conditions A" to prepare a cured product, and the dynamic viscoelasticity was evaluated. As a result, the rubbery state elastic modulus was 10.2 MPa.

### (Examples 66 and 67)

Each epoxy resin composition, cured epoxy resin, and pressure vessel were produced by the same method as in Example 65 except that the resin formulation was changed as shown in Table 8. The evaluation results are shown in Table 8. Both of the obtained pressure vessels showed satisfactory heat resistance and strain translation rate.

### (Comparative Example 1)

An epoxy resin composition, a cured epoxy resin, and a fiber reinforced material were produced by the same method as in Example 1 (except that the curing conditions were the conditions shown in the table) except that the resin formulation was changed as shown in Table 9. The cure shrinkage rate was as low as 3.1% and was insufficient, the gel time was 98 minutes and the epoxy resin composition cured slowly, and the rubbery state elastic modulus was as high as 14.0 MPa. As a result, the tensile strength translation rate of the fiber reinforced material was 68%, and was insufficient.

In addition, in the evaluation according to <Method for evaluating pultrusion moldability>, the pultrusion speed slowed, streaky blurs generated on the surface of the molded article, and the epoxy resin composition was insufficient in pultrusion moldability.

### (Comparative Example 2)

An epoxy resin composition, a cured epoxy resin, and a fiber reinforced material were produced by the same method as in Example 1 except that the resin formulation was changed as shown in Table 9. Although the gel time was 46 minutes and the epoxy resin composition was satisfactory in curability, the cure shrinkage rate was as low as 2.6% and was insufficient, and the rubbery state elastic modulus was as high as 12.2 MPa. As a result, the tensile strength translation rate of the fiber reinforced material was 70%, and was insufficient.

In addition, in the evaluation according to <Method for evaluating pultrusion moldability>, the pultrusion speed markedly slowed, streaky blurs generated on the surface of the molded article, and the epoxy resin composition was insufficient in pultrusion moldability.

### (Comparative Example 3)

An epoxy resin composition, a cured epoxy resin, and a fiber reinforced material were produced by the same method as in Example 1 (except that the curing conditions were the conditions shown in the table) except that the resin formulation was changed as shown in Table 9. In this example, "Denacol (registered trademark)" EX-731 used in place of the constituent element [A] is a monofunctional epoxy resin. The cure shrinkage rate was as low as 3.2% and was insufficient, the gel time was 75 minutes and the epoxy resin composition cured slowly, and the rubbery state elastic modulus was as high as 12.0 MPa. As a result, the tensile strength translation rate of the fiber reinforced material was 72%, and was insufficient.

In addition, in the evaluation according to <Method for evaluating pultrusion moldability>, the pultrusion speed slowed, streaky blurs generated on the surface of the molded article, and the epoxy resin composition was insufficient in pultrusion moldability.

### (Comparative Example 4)

An epoxy resin composition, a cured epoxy resin, and a fiber reinforced material were produced by the same method as in Example 1 except that the resin formulation was changed as shown in Table 9. Although the gel time was 38 minutes and the epoxy resin composition was satisfactory in curability, and the cure shrinkage rate was 4.7% and the epoxy resin composition was also satisfactory in cure shrinkage rate, the rubbery state elastic modulus was as high as 14.1 MPa. As a result, the tensile strength translation rate of the fiber reinforced material was 69%, and was insufficient.

In the evaluation according to <Method for evaluating pultrusion moldability>, the epoxy resin composition scarcely adhered to the mold outlet, and the epoxy resin composition was satisfactory in pultrusion moldability.

### (Comparative Example 5)

An epoxy resin composition, a cured epoxy resin, and a fiber reinforced material were produced by the same method as in Example 1 (except that the curing conditions were the conditions shown in the table) except that the resin formulation was changed as shown in Table 9. The cure shrinkage rate was as high as 7.3% and was inadequate, the gel time was 190 minutes and the epoxy resin composition cured slowly, and the rubbery state elastic modulus was as high as 16.5 MPa. As a result, the tensile strength translation rate of the fiber reinforced material was 67%, and was insufficient.

In the evaluation according to <Method for evaluating pultrusion moldability>, the epoxy resin composition scarcely adhered to the mold outlet, and the epoxy resin composition was satisfactory in pultrusion moldability.

### (Comparative Example 6)

An epoxy resin composition, a cured epoxy resin, and a fiber reinforced material were produced by the same method as in Example 1 except that the resin formulation was changed as shown in Table 9.

The cure shrinkage rate was as low as 3.3% and was insufficient, and the rubbery state elastic modulus was as high as 12.5 MPa. As a result, the tensile strength translation rate of the fiber reinforced material was 71%, and was insufficient.

In addition, in the evaluation according to <Method for evaluating pultrusion moldability>, the pultrusion speed slowed, streaky blurs generated on the surface of the molded article, and the epoxy resin composition was insufficient in pultrusion moldability.

### (Comparative Example 7)

An epoxy resin composition, a cured resin, and a fiber reinforced material were produced by the same method as in Example 19 except that "Denacol (registered trademark)" EX-141 as a monofunctional epoxy having no steric effects was used in place of the constituent element [A]. The resin formulation and evaluation results are shown in Table 10. The cured epoxy resin showed a satisfactory rubbery state elastic modulus of 5.5 MPa, and the fiber reinforced material had a satisfactory tensile strength translation rate of 80%, but the tensile elongation was as high as 3.8%. As a result, the glass transition temperature of the fiber reinforced material was 82°C, and the interlaminar shear strength after the wet heat treatment was 67 MPa as shown in Table 14 and was insufficient.

Furthermore, an epoxy resin composition and a pressure vessel were produced by the same method as in Example 19. The evaluation results are shown in Table 13. The obtained pressure vessel had a glass transition temperature of 80°C, and was insufficient in heat resistance.

### (Comparative Example 8)

An epoxy resin composition, a cured resin, and a fiber reinforced material were produced by the same method as in Example 19 except that the constituent element [A] was not added. The resin formulation and evaluation results are shown in Table 10. The tensile elongation was 2.3%, and the rubbery state elastic modulus was as high as 11.4 MPa. As a result, the tensile strength translation rate of the fiber reinforced material was 73%, and was insufficient.

Furthermore, an epoxy resin composition and a pressure vessel were produced by the same method as in Example 19. The evaluation results are shown in Table 13. The strain translation rate of the obtained pressure vessel was 82%, and was insufficient.

### (Comparative Example 9)

An epoxy resin composition, a cured resin, and a fiber reinforced material were produced by the same method as in Example 19 except that the resin formulation was changed as shown in Table 10. The evaluation results are shown in Table 10. The tensile elongation was 3.7%, and the rubbery state elastic modulus was as high as 16.0 MPa. As a result, the tensile strength translation rate of the fiber reinforced material was 67%, and was insufficient.

### (Comparative Example 10)

An epoxy resin composition, a cured resin, and a fiber reinforced material were produced by the same method as in Example 30 except that "Denacol (registered trademark)" EX-141 as a monofunctional epoxy having no steric effects was used in place of the constituent element [A]. The resin formulation and evaluation results are shown in Table 10. The cured epoxy resin showed a satisfactory rubbery state elastic modulus of 4.3 MPa, and the fiber reinforced material had a satisfactory tensile strength translation rate of 82%, but the tensile elongation was as high as 4.3%. As a result, the glass transition temperature of the fiber reinforced material was 86°C, and the interlaminar shear strength after the wet heat treatment was 62 MPa as shown in Table 14 and was insufficient.

### (Comparative Example 11)

An epoxy resin composition, a cured resin, and a fiber reinforced material were produced by the same method as in Example 30 (except that the curing conditions were the conditions shown in the table) except that the constituent element [A] was not added. The resin formulation and evaluation results are shown in Table 10. The tensile elongation was 3.2%, and the rubbery state elastic modulus was as high as 13.2 MPa. As a result, the tensile strength translation rate of the fiber reinforced material was 70%, and was insufficient.

### (Comparative Example 12)

An epoxy resin composition, a cured resin, and a fiber reinforced material were produced by the same method as in Example 30 (except that the curing conditions were the conditions shown in the table) except that the resin formulation was changed as shown in Table 10. The evaluation results are shown in Table 10. The tensile elongation was 3.3%, and the rubbery state elastic modulus was as high as 13.0 MPa. As a result, the tensile strength translation rate of the fiber reinforced material was 70%, and was insufficient.

Furthermore, an epoxy resin composition and a pressure vessel were produced by the same method as in Example 30. The evaluation results are shown in Table 13. The strain translation rate of the obtained pressure vessel was 80%, and was insufficient.

### (Comparative Example 13)

An epoxy resin composition, a cured epoxy resin, and a fiber reinforced material were produced by the same method as in Example 38 except that the resin formulation was changed as shown in Table 11. Although the gel time was 12 minutes and the epoxy resin composition was satisfactory in curability, the rubbery state elastic modulus was as high as 15.5 MPa. As a result, the tensile strength translation rate of the fiber reinforced material was 66%, and was insufficient.

### (Comparative Example 14)

An epoxy resin composition, a cured epoxy resin, and a fiber reinforced material were produced by the same method as in Example 38 except that the resin formulation was changed as shown in Table 11. Although the gel time was 29 minutes and the epoxy resin composition was satisfactory in curability, the rubbery state elastic modulus was as high as 12.5 MPa. As a result, the tensile strength translation rate of the fiber reinforced material was 72%, and was insufficient.

### (Comparative Example 15)

An epoxy resin composition, a cured epoxy resin, and a fiber reinforced material were produced by the same method as in Example 38 except that the resin formulation was changed as shown in Table 11. Although the gel time was 3 minutes and the epoxy resin composition was satisfactory in curability, the rubbery state elastic modulus was as high as 17.1 MPa. As a result, the tensile strength translation rate of the fiber reinforced material was 65%, and was insufficient.

### (Comparative Example 16)

An epoxy resin composition, a cured epoxy resin, and a fiber reinforced material were produced by the same method as in Example 38 except that the resin formulation was changed as shown in Table 11. In this example, "Denacol (registered trademark)" EX-141 used in place of the constituent element [A] is a monofunctional epoxy resin having no steric effects. The rubbery state elastic modulus was as low as 6.7 MPa, but the gel time was 175 minutes, and the epoxy resin composition cured inadequately slowly.

### (Comparative Example 17)

An epoxy resin composition was produced by the same method as in Example 38 except that the resin formulation was changed as shown in Table 11. In this example, the hardener used was an aromatic amine hardener. At 80°C, the epoxy resin composition did not gelate even after 200 minutes or more, and no cured product was produced.

### (Comparative Example 18)

An epoxy resin composition was produced by the same method as in Example 38 except that the resin formulation was changed as shown in Table 11. At 80°C, the epoxy resin composition did not gelate even after 200 minutes or more, and no cured product was produced.

### (Comparative Example 19)

An epoxy resin composition was produced according to the method described in Example 1 of Patent Document 2 (Japanese Patent Laid-open Publication No. 2005-120127). The obtained cured resin had a very high rubbery state elastic modulus of 25.0 MPa (Table 15). This epoxy resin composition had a high viscosity, and did not impregnate into the fiber by <Method for producing fiber reinforced material - 1>. As a result, large amounts of voids were produced in the fiber reinforced material. Therefore, the epoxy resin composition was heated to 70°C for impregnation to give an epoxy resin-impregnated carbon fiber sheet. Then, a fiber reinforced material was obtained in the same manner as in <Method for producing fiber reinforced material - 1>. The tensile strength translation rate of the obtained fiber reinforced material was 61%, and was insufficient. Furthermore, a pressure vessel was obtained from the obtained epoxy resin composition. The obtained pressure vessel had a high glass transition temperature of 200°C, but the strain translation rate was 70% and was insufficient.

### (Comparative Example 20)

An epoxy resin composition (base resin composition) was produced according to the method described in Example 14 of Patent Document 3 (Japanese Patent Laid-open Publication No. 2010-59225). The cure shrinkage rate was as high as 7.2% and was inadequate, and the rubbery state elastic modulus was as high as 21.1 MPa (Table 15).

This epoxy resin composition had a very high viscosity, and no epoxy resin-impregnated carbon fiber sheet was obtained by the method shown in <Method for producing fiber reinforced material>. Accordingly, the epoxy resin composition was dissolved in acetone, and the resulting liquid resin was impregnated into a carbon fiber and then dried under reduced pressure to distill off acetone, whereby an epoxy resin-impregnated carbon fiber sheet was produced. Then, a fiber reinforced material was obtained in the same manner as in <Method for producing fiber reinforced material>. As a result, the tensile strength translation rate of the fiber reinforced material was 61%, and was insufficient.

In addition, in the evaluation according to <Method for evaluating pultrusion moldability>, the viscosity of the epoxy resin composition was very high, and pultrusion molding was impossible.

### (Comparative Example 21)

An epoxy resin composition was produced according to the method described in Example 6 of Patent Document 4 (Japanese Patent No. 4687167). The cured resin obtained by curing the epoxy resin composition had a high rubbery state elastic modulus of 11.2 MPa (Table 15). Since this epoxy resin composition had a very high viscosity, an epoxy resin-impregnated carbon fiber sheet was produced by the same method as in Comparative Example 21. Then, a fiber reinforced material was obtained in the same manner as in <Method for producing fiber reinforced material - 1>. The tensile strength translation rate of the obtained fiber reinforced material was 70%, and was insufficient.

### (Comparative Example 22)

An epoxy resin composition was produced according to the method described in Example 9 of Patent Document 6 (Japanese Patent Laid-open Publication No. 2012-82394). The cured resin obtained by curing the epoxy resin composition had a high rubbery state elastic modulus of 18.0 MPa (Table 15). Since this epoxy resin composition had a very high viscosity, an epoxy resin-impregnated carbon fiber sheet was produced by the same method as in Comparative Example 21. Then, a fiber reinforced material was obtained in the same manner as in <Method for producing fiber reinforced material>. The tensile strength translation rate of the obtained fiber reinforced material was 63%, and was insufficient.

### (Comparative Example 23)

With reference to the epoxy formulation in Example 5 of Patent Document 5 (Japanese Patent Laid-open Publication No. 2010-174073), an epoxy resin composition and a cured resin were produced according to the resin formulation as shown in Table 11. The evaluation results are shown in Table 11. The tensile elongation was 2.8%, and the rubbery state elastic modulus was as high as 14.0 MPa. As a result, the tensile strength translation rate of the obtained fiber reinforced material was 69%, and was insufficient.

### (Comparative Example 24)

An epoxy resin composition was produced according to the method described in Example 13 of Patent Document 8 (Japanese Patent Laid-open Publication No. 2011-46797). The cured resin obtained by curing the epoxy resin composition had a high rubbery state elastic modulus of 12.0 MPa (Table 15). Since this epoxy resin composition had a very high viscosity, an epoxy resin-impregnated carbon fiber sheet was produced by the same method as in Comparative Example 21. Then, a fiber reinforced material was obtained in the same manner as in <Method for producing fiber reinforced material - 1>. The tensile strength translation rate of the obtained fiber reinforced material was 70%, and was insufficient.

### (Comparative Example 25)

An epoxy resin composition was produced according to the method described in Example 3 of Patent Document 9 (Japanese Patent Laid-open Publication No. 2006-265458). The cured resin obtained by curing the epoxy resin composition had a high rubbery state elastic modulus of 11.4 MPa (Table 15). A fiber reinforced material was produced from the obtained epoxy resin composition according to <Method for producing fiber reinforced material - 1>. The tensile strength translation rate of the obtained fiber reinforced material was 71%, and was insufficient.

### (Comparative Example 26)

An epoxy resin composition was produced according to the method described in Example 1 of Patent Document 10 (Published Japanese Translation No. 2009-521589). The cured resin obtained by curing the epoxy resin composition had a high rubbery state elastic modulus of 10.5 MPa (Table 15). A fiber reinforced material was produced from the obtained epoxy resin composition according to <Method for producing fiber reinforced material - 1>. The tensile strength translation rate of the obtained fiber reinforced material was 72%, and was insufficient.

**[Table 1]**

| Constituent element | | Component | Example 1 | Example 2 | Example 3 | Example 4 | Example 5 | Example 6 | Example 7 | Example 8 |
|---|---|---|---|---|---|---|---|---|---|---|
| [A] | | p-tert-Butyl phenyl glycidyl ether ("EPIOL (registered trademark)" TB) | | | | 20 | 25 | | 10 | |
| | | p-sec-Butyl phenyl glycidyl ether ("EPIOL (registered trademark)" SB) | | 50 | | | | 25 | | 30 |
| | | o-Phenylphenol glycidyl ether (OPP-G) | 60 | | 20 | | | 10 | | |
| [B] | [b1] | N,N-diglycidyl aniline (GAN) | | | 30 | | 50 | | | |
| | | N,N-diglycidyl orthotoluidine (GOT) | | | | | | | | 50 |
| | | N,N-diglycidyl-4-phenoxyaniline (Px-GAN) | | | | 20 | | 30 | | 10 |
| | [b2] | N,N,N',N'-tetraglycidyl-4,4'-diaminodiphenylmethane ("SUMI-EPOXY (registered trademark)" ELM434) | 15 | 10 | | | | | | |
| [B] | [B] other than [b1] and [b2] | Fluorene epoxy resin ("OGSOL (registered trademark)" PG-100) | | | | 20 | | | 40 | |
| | | Triglycidyl-p-aminophenol ("Araldite (registered trademark)" MY0500) | | | | | | | 10 | |
| | | N,N,N',N'-tetraglycidyl-m-xylenediamine ("TETRAD (registered trademark)"-X) | | | | | | | | 10 |
| | | Liquid bisphenol A epoxy resin ("jER (registered trademark)" 828) | | 40 | | | 25 | 35 | | |
| | | Liquid bisphenol F epoxy resin ("jER (registered trademark)" 806) | 25 | | 50 | 40 | | | 40 | |
| [C] | [c1] | Methyltetrahydrophthalic anhydride (HN-2200) | | 83.0 | | 88.0 | | 83.5 | | |
| | | Methylnadic anhydride ("KAYAHARD (registered trademark)" MCD) | 91.5 | | 105.0 | | 112.0 | | 92.0 | 116.0 |
| Accelerator | | N,N-dimethylbenzyldiamine ("KAOLIZER (registered trademark)" No. 20) | | | | | 4 | 4 | 4 | 4 |
| | | DBU salt ("U-CAT (registered trademark)" SA102) | 4 | 4 | 4 | 4 | | | | |
| Curing conditions | | - | B | B | B | B | B | B | B | B |
| Physical properties of resin | | Cure shrinkage rate (%) | 3.8 | 3.6 | 3.6 | 3.8 | 4.1 | 4.0 | 3.6 | 4.5 |
| | | Rubbery state elastic modulus (MPa) | 3.5 | 3.8 | 5.3 | 5.8 | 4.8 | 4.2 | 4.8 | 4.6 |
| | | Glass transition temperature (°C) | 92 | 98 | 110 | 117 | 122 | 116 | 121 | 125 |
| CFRP properties | | Tensile strength translation rate (%) | 84 | 83 | 81 | 80 | 82 | 84 | 81 | 83 |
| | | Evaluation of pultrusion moldability | C | C | C | B | B | B | C | A |

**[Table 2]**

| Constituent element | | Component | Example 9 | Example 10 | Example 11 | Example 12 | Example 13 | Example 14 | Example 15 | Example 16 | Example 17 | Example 18 |
|---|---|---|---|---|---|---|---|---|---|---|---|---|
| [A] | | p-tert-Butyl phenyl glycidyl ether ("EPIOL (registered trademark)" TB) | | 10 | | | 25 | 35 | | 20 | | 20 |
| | | p-sec-Butyl phenyl glycidyl ether ("EPIOL (registered trademark)" SB) | | | 25 | 15 | | | | | | |
| | | o-Phenylphenol glycidyl ether (OPP-G) | 20 | | | 10 | | 20 | 10 | | 30 | |
| [B] | [b1] | N,N-diglycidyl aniline (GAN) | | | | | 35 | | 30 | | | |
| | | N,N-diglycidyl orthotoluidine (GOT) | 10 | | | 20 | | 20 | | | | 10 |
| | | N,N-diglycidyl-4-phenoxyaniline (Px-GAN) | | | 10 | | | | | | 20 | |
| | [b2] | N,N,N',N'-tetraglycidyl-4,4'-diaminodiphenylmethane ("SUMI-EPOXY (registered trademark)" ELM434) | | 15 | | | 5 | 10 | 20 | 10 | 5 | |
| | [B] other than [b1] and [b2] | Fluorene epoxy resin ("OGSOL (registered trademark)" PG-100) | | | | | | | | 30 | | |
| | | N,N,N',N'-tetraglycidyl-m-xylenediamine ("TETRAD (registered trademark)"-X) | | | | 10 | | | | | | |
| | | Liquid bisphenol A epoxy resin ("jER (registered trademark)" 828) | 70 | | 65 | 45 | | 15 | | 40 | | 70 |
| | | Liquid bisphenol F epoxy resin ("jER (registered trademark)" 806) | | 75 | | | 35 | | 40 | | 45 | |
| [C] | [c2] | Isophoronediamine ("Baxxodur (registered trademark)" EC201) | 13.2 | | 18.4 | | 16.0 | 23.5 | | 11.0 | 14.7 | 13.2 |
| | | 1,4-Bis(aminomethyl)cyclohexane (XTA-801) | | 21.2 | | 15.2 | | | | | | |
| | | 2,2'-Dimethyl-4,4'-methylene biscyclohexylamine ("Baxxodur (registered trademark)" EC331) | 13.2 | 5.3 | | 15.2 | 16.0 | | | | | 13.2 |
| | | Polypropylene glycol diamine ("JEFFAMINE (registered trademark)" D-230) | | | 4.6 | | | | 7.7 | | | |
| [C] | [c3] | Diethyltoluenediamine ("jER Cure (registered trademark)" W) | | | | | | | 17.9 | 11.0 | 9.8 | |
| Curing conditions | | | A | A | A | A | A | A | B | B | A | A |
| Physical properties of resin | | Cure shrinkage rate (%) | 4.3 | 4.5 | 3.7 | 4.3 | 5.9 | 6.5 | 5.7 | 6.7 | 6.3 | 4.4 |
| | | Rubbery state elastic modulus (MPa) | 5.6 | 9.3 | 5.5 | 5.2 | 5.6 | 3.8 | 4.3 | 5.0 | 4.8 | 5.2 |
| | | Glass transition temperature (°C) | 110 | 127 | 113 | 118 | 115 | 96 | 118 | 125 | 123 | 115 |
| CFRP properties | | Tensile strength translation rate (%) | 81 | 76 | 82 | 82 | 81 | 83 | 84 | 82 | 84 | 82 |
| | | Evaluation of pultrusion moldability | B | A | C | B | A | A | A | A | A | B |

**[Table 3]**

| Constituent element | | Component | Example 19 | Example 20 | Example 21 | Example 22 | Example 23 | Example 24 | Example 25 | Example 26 | Example 27 | Example 28 | Example 29 |
|---|---|---|---|---|---|---|---|---|---|---|---|---|---|
| [A] | | p-tert-Butyl phenyl glycidyl ether ("Denacol (registered trademark)" EX-146) | 25 | 25 | | 25 | 15 | 55 | 25 | 30 | | 35 | 20 |
| | | o-Phenylphenol glycidyl ether ("Denacol (registered trademark)" EX-142) | | | 20 | | | | | | | | |
| | | p-sec-Butyl phenyl glycidyl ether ("EPIOL (registered trademark)" SB) | | | | | | | | | 30 | | |
| [B] | [b1] | N,N-diglycidyl aniline (GAN) | 25 | 25 | | | 40 | | 25 | | | 25 | |
| | | N,N-diglycidyl orthotoluidine (GOT) | | | 35 | | | 45 | | 35 | 35 | | 35 |
| | [b2] | N,N,N',N'-tetraglycidyl-4,4'-diaminodiphenylmethane ("SUMI-EPOXY (registered trademark)" ELM434) | | | | 10 | | | | | | 10 | |
| | [B] other than [b1] and [b2] | Fluorene epoxy resin ("OGSOL (registered trademark)" PG-100) | | 20 | | | | | | | | | |
| | | Liquid bisphenol A epoxy resin ("jER (registered trademark)" 828) | 50 | 30 | 45 | | | | 50 | | | 30 | 45 |
| | | Liquid bisphenol F epoxy resin ("jER (registered trademark)" 830) | | | | 65 | 45 | | | 35 | 35 | | |
| [C] | [c1] | Methyltetrahydrophthalic anhydride (HN-2200) | 91 | 86 | | 90 | 102 | 91 | | | | | |
| | | Methylnadic anhydride ("KAYAHARD (registered trademark)" MCD) | | | 97 | | | | 96 | 99 | 98 | 94 | 98 |
| Accelerator | | N,N-dimethylbenzylamine ("KAOLIZER (registered trademark)" No. 20) | 2 | 2 | 4 | | 3 | 2 | 2 | 4 | 4 | | 4 |
| | | 2-Ethyl-4-methylimidazole ("Curezol (registered trademark)" 2E4MZ) | | | | 1 | | | | | | 1 | |
| Curing conditions | | - | A | A | A | A | A | A | A | A | A | A | A |
| Resin properties | | Viscosity (mPa·s) | 131 | 517 | 245 | 258 | 242 | 145 | 221 | 318 | 176 | 323 | 240 |
| | | Tensile elongation (%) | 2.5 | 2.1 | 1.9 | 2.6 | 3.0 | 2.3 | 2.1 | 2.4 | 2.7 | 1.8 | 1.9 |
| | | Rubbery state elastic modulus (MPa) | 5.7 | 4.8 | 5.0 | 5.7 | 7.4 | 5.2 | 5.8 | 4.8 | 6.3 | 5.2 | 4.6 |
| CFRP properties | | Glass transition temperature (°C) | 112 | 117 | 119 | 125 | 107 | 96 | 120 | 123 | 120 | 122 | 124 |
| | | Tensile strength translation rate (%) | 80 | 82 | 81 | 80 | 78 | 80 | 80 | 80 | 79 | 81 | 82 |

**[Table 4]**

| Constituent element | | Component | Example 30 | Example 31 | Example 32 | Example 33 | Example 34 | Example 35 | Example 36 | Example 37 |
|---|---|---|---|---|---|---|---|---|---|---|
| [A] | | p-tert-Butyl phenyl glycidyl ether ("Denacol (registered trademark)" EX-146) | 25 | 30 | 15 | | | 25 | 30 | 25 |
| | | o-Phenylphenol glycidyl ether ("Denacol (registered trademark)" EX-142) | | | | 25 | 30 | | | |
| [B] | [b1] | N,N-diglycidyl aniline (GAN) | | 40 | 50 | 20 | | 30 | 40 | 25 |
| | [b2] | N,N,N',N'-tetraglycidyl-4,4'-diaminodiphenylmethane ("SUMI-EPOXY (registered trademark)" ELM434) | 5 | | | 10 | 15 | | | |
| | [B] other than [b1] and [b2] | Fluorene epoxy resin ("OGSOL (registered trademark)" PG-100) | | 30 | | | | | 30 | |
| | | Liquid bisphenol A epoxy resin ("jER (registered trademark)" 828) | 70 | | 35 | 45 | | 45 | | 50 |
| | | Liquid bisphenol F epoxy resin ("jER (registered trademark)" 830) | | | | | 55 | | | |
| [C] | [c2] | Poly(propylene glycol)diamine ("JEFFAMINE (registered trademark)" D400) | | | | | | 11.4 | | |
| | | Isophoronediamine ("Baxxodur (registered trademark)" EC201) | 19 | | | 14.7 | 14.5 | | 18.7 | 10.1 |
| | | 3,3'-Dimethyl-4,4'-diaminodicyclohexylmethane ("Baxxodur (registered trademark)" EC331) | 4.7 | 35 | 40 | 14.7 | 14.5 | | 8 | |
| | [c3] | Diethyltoluenediamine ("Aradur (registered trademark)" 5200) | | | | | | 26.6 | | 15.2 |
| Curing conditions | | - | B | B | B | B | B | A | B | A |
| Resin properties | | Viscosity (mPa·s) | 583 | 1123 | 587 | 392 | 523 | 584 | 1089 | 805 |
| | | Tensile elongation (%) | 2.7 | 2.2 | 2.1 | 1.9 | 2.4 | 2.8 | 2.0 | 2.1 |
| | | Rubbery state elastic modulus (MPa) | 5.6 | 5.0 | 9.8 | 4.3 | 4.2 | 4.0 | 4.7 | 4.5 |
| CFRP properties | | Glass transition temperature (°C) | 114 | 122 | 134 | 119 | 112 | 105 | 121 | 110 |
| | | Tensile strength translation rate (%) | 81 | 82 | 75 | 82 | 83 | 83 | 82 | 82 |

**Table 5**

| Constituent element | | Component | Example 38 | Example 39 | Example 40 | Example 41 | Example 42 | Example 43 | Example 44 | Example 45 | Example 46 |
|---|---|---|---|---|---|---|---|---|---|---|---|
| [A] | | p-tert-Butyl phenyl glycidyl ether ("Denacol (registered trademark)" EX-146) | | | | 30 | 20 | | 10 | | 20 |
| | | p-sec-Butyl phenyl glycidyl ether ("EPIOL (registered trademark)" SB) | 20 | 20 | | | | 45 | | | |
| | | o-Phenylphenol glycidyl ether ("Denacol (registered trademark)" EX-142) | | | 30 | | 10 | | | 20 | |
| [B] | [b1] | N,N-diglycidyl-4-phenoxyaniline (Px-GAN) | | | | | | | | 10 | 10 |
| | [b2] | N,N,N',N'-tetraglycidyl-4,4'-diaminodiphenylmethane ("SUMI-EPOXY (registered trademark)" ELM434) | | | | | | | 15 | | |
| | [B] other than [b1] and [b2] | N,N,N',N'-tetraglycidyl-m-xylenediamine ("TETRAD (registered trademark)"-X) | | | | | | | | 5 | 5 |
| | | Liquid bisphenol A epoxy resin ("jER (registered trademark)" 828) | 80 | 80 | | 70 | | | 75 | 65 | 65 |
| | | Liquid bisphenol F epoxy resin ("jER (registered trademark)" 806) | | | 70 | | 70 | 55 | | | |
| [C] | [c2] | Isophoronediamine ("Baxxodur (registered trademark)" EC201 ) | | | 18.1 | 12.5 | 20.0 | | 20.8 | 13.5 | 13.6 |
| | | 1,4-Bis(aminomethyl)cyclohexane (XTA-801) | 20.0 | | | | | | | | |
| | | 2,2'-Dimethyl-4,4'-methylenebiscyclohexylamine ("Baxxodur (registered trademark)" EC331 ) | | 21.5 | 7.7 | 12.5 | 5.0 | 31.5 | 5.2 | 13.5 | 13.6 |
| Curing conditions | | - | B | B | B | B | B | B | B | B | B |
| Physical properties of resin | | Gel time (80°C) (min) | 10 | 39 | 30 | 37 | 33 | 54 | 10 | 25 | 23 |
| | | Rubbery state elastic modulus (MPa) | 8.8 | 7.2 | 6.0 | 5.5 | 5.7 | 3.8 | 9.1 | 5.5 | 5.1 |
| | | Glass transition temperature (°C) | 128 | 120 | 106 | 108 | 117 | 96 | 126 | 125 | 129 |
| | | Compression shear strength (MPa) | 58 | 55 | 61 | 53 | 64 | 47 | 66 | 70 | 71 |
| CFRP properties | | Tensile strength translation rate (%) | 76 | 79 | 80 | 81 | 81 | 84 | 77 | 81 | 82 |

**[Table 6]**

| Constituent element | | Component | Example 47 | Example 48 | Example 49 | Example 50 | Example 51 | Example 52 | Example 53 | Example 54 |
|---|---|---|---|---|---|---|---|---|---|---|
| [A] | | p-tert-Butyl phenyl glycidyl ether ("Denacol (registered trademark)" EX-146) | | | | | 30 | | 20 | |
| | | p-sec-Butyl phenyl glycidyl ether ("EPIOL (registered trademark)" SB) | 20 | | | 25 | | | | 15 |
| | | o-Phenylphenol glycidyl ether ("Denacol (registered trademark)" EX-142) | | 20 | 20 | | | 20 | | |
| [B] | [b1] | N,N-diglycidyl aniline (GAN) | 5 | | | | | | 40 | |
| | | N,N-diglycidyl orthotoluidine (GOT) | | | | | | | | 60 |
| | | N,N-diglycidyl-4-phenoxyaniline (Px-GAN) | | | | | 10 | | | |
| | [b2] | N,N,N',N'-tetraglycidyl-4,4'-diaminodiphenylmethane ("SUMI-EPOXY (registered trademark)" ELM434) | | 10 | | 5 | | 5 | 15 | |
| | [B] other than [b1] and [b2] | Triglycidyl-p-aminophenol ("Araldite (registered trademark)" MY0500) | | | | | | | | 5 |
| | | Liquid bisphenol A epoxy resin ("jER (registered trademark)" 828) | 75 | 70 | 40 | 70 | | | 25 | |
| | | Liquid bisphenol F epoxy resin ("jER (registered trademark)" 806) | | | | | 50 | 65 | | 15 |
| | | Fluorene epoxy resin ("OGSOL (registered trademark)" EG-200) | | | 40 | | 10 | 10 | | 5 |
| [C] | [c2] | Isophoronediamine ("Baxxodur (registered trademark)" EC201) | 17.5 | 17.9 | 20.3 | 18.8 | 17.5 | 13.9 | 26.6 | 7.4 |
| | | 2,2'-Dimethyl-4,4'-methylene biscyclohexylamine ("Baxxodur (registered trademark)" EC331) | 7.5 | 7.7 | 8.7 | | 7.5 | 13.9 | 3.0 | 29.6 |
| | | Polypropylene glycol diamine ("JEFFAMINE (registered trademark)" D-230) | | | | 4.7 | | | | |
| Curing conditions | | - | B | B | B | B | B | B | B | B |
| Physical properties of resin | | Gel time (80°C) (min) | 23 | 11 | 21 | 29 | 37 | 36 | 37 | 41 |
| | | Rubbery state elastic modulus (MPa) | 5.9 | 6.7 | 6.0 | 5.6 | 4.8 | 5.9 | 4.9 | 4.8 |
| | | Glass transition temperature (°C) | 112 | 122 | 110 | 115 | 107 | 115 | 117 | 111 |
| | | Compression shear strength (MPa) | 58 | 62 | 65 | 60 | 76 | 68 | 84 | 80 |
| CFRP properties | | Tensile strength translation rate (%) | 81 | 79 | 81 | 81 | 82 | 81 | 82 | 83 |

**[Table 7]**

| Constituent element | | Component | Example 55 | Example 56 | Example 57 | Example 58 | Example 59 | Example 60 | Example 61 | Example 62 | Example 63 | Example 64 |
|---|---|---|---|---|---|---|---|---|---|---|---|---|
| [A] | | p-tert-Butyl phenyl glycidyl ether ("Denacol (registered trademark)" EX-146) | | 35 | | 25 | | 25 | 15 | 30 | | 30 |
| | | p-sec-Butyl phenyl glycidyl ether ("EPIOL (registered trademark)" SB) | 45 | | 10 | | | | | | | |
| | | o-Phenylphenol glycidyl ether ("Denacol (registered trademark)" EX-142) | | | 20 | | 25 | | | | 30 | |
| [B] | [b1] | N,N-diglycidyl aniline (GAN) | | | | 30 | | | | | 30 | |
| | | N,N-diglycidyl-4-phenoxyaniline (Px-GAN) | | | | | | | 30 | 20 | | 20 |
| | [b2] | N,N,N',N'-tetraglycidyl-4,4'-diaminodiphenylmethane ("SUMI-EPOXY (registered trademark)" ELM434) | | | | | 10 | | | 10 | 5 | 10 |
| [B] | [B] other than [b1] and [b2] | Triglycidyl-p-aminophenol ("Araldite (registered trademark)" MY0500) | | | | | | | | 10 | | 10 |
| | | N,N,N',N'-tetrag lycidyl-m-xylenediamine ("TETRAD (registered trademark)"-X) | | | | | | 20 | | | | |
| | | Liquid bisphenol A epoxy resin ("jER (registered trademark)"828) | 55 | | 70 | 45 | | 30 | | 30 | | 30 |
| | | Liquid bisphenol F epoxy resin ("jER (registered trademark)"806) | | 65 | | | 65 | | 55 | | 35 | |
| | | Fluorene epoxy resin ("OGSOL (registered trademark)" EG-200) | | | | | | 25 | | | | |
| [C] | [c1] | Methyltetrahydrophthalic anhydride (HN-2200) | 80.0 | 90.0 | 83.0 | 30.0 | 50.0 | | 96.0 | | | |
| | | Methylnadic anhydride ("KAYAHARD (registered trademark)" MCD) | | | | 70.0 | 50.0 | 100.0 | | 103.0 | 109.0 | 103.0 |
| Accelerator | | N,N-dimethylbenzylamine ("KAOLIZER (registered trademark)" No. 20) | | | | 4.0 | 4.0 | 4.0 | | 4.0 | 4.0 | |
| | | DBU salt ("U-CAT (registered trademark)" SA102) | 4.0 | 4.0 | 4.0 | | | | 4.0 | | | 4.0 |
| Curing conditions | | - | B | B | B | B | B | B | B | B | B | B |
| Physical properties of resin | | Gel time (80°C) (min) | 48 | 45 | 33 | 57 | 38 | 43 | 17 | 27 | 45 | 62 |
| | | Rubbery state elastic modulus (MPa) | 4.5 | 6.2 | 5.2 | 4.8 | 5.5 | 7.6 | 8.6 | 5.2 | 4.8 | 5.0 |
| | | Glass transition temperature (°C) | 86 | 101 | 112 | 125 | 131 | 130 | 122 | 126 | 115 | 120 |
| | | Compression shear strength (MPa) | 55 | 61 | 65 | 83 | 62 | 82 | 88 | 81 | 85 | 81 |
| CFRP properties | | Tensile strength translation rate (%) | 82 | 80 | 82 | 83 | 81 | 78 | 77 | 82 | 83 | 82 |

**[Table 8]**

| Constituent element | | Component | Example 65 | Example 66 | Example 67 |
|---|---|---|---|---|---|
| [B] | [b1] | N,N-diglycidyl aniline (GAN) | | 20 | |
| | [B] other than [b1] and [b2] | Liquid bisphenol A epoxy resin ("jER (registered trademark)" 828) | 60 | 40 | |
| | | Liquid bisphenol F epoxy resin ("jER (registered trademark)" 830) | | | 100 |
| | | Solid bisphenol A epoxy resin ("jER (registered trademark)" 1001) | 40 | 40 | |
| [C] | [c1] | Methyltetrahydrophthalic anhydride (HN-2200) | 64 | 71 | |
| | [c2] | Polypropylene glycol diamine ("JEFFAMINE (registered trademark)" D-400) | | | 6 |
| | [c3] | Diethyltoluenediamine ("Aradur (registered trademark)" 5200) | | | 24.1 |
| Accelerator | | N,N-dimethylbenzylamine ("KAOLIZER (registered trademark)" No. 20) | 2 | 2 | |
| Curing cond itions | | - | A | A | A |
| Resin proper ties | | Rubbery state elastic modulus (MPa) | 10.2 | 8.5 | 8.9 |
| Properties of pressure vessel | | Glass transition temperature (°C) | 138 | 143 | 115 |
| | | Strain translation rate (%) | 85 | 86 | 86 |

**[Table 9]**

| Constituent element | | Component | Comparative Example 1 | Comparative Example 2 | Comparative Example 3 | Comparative Example 4 | Comparative Example 5 | Comparative Example 6 |
|---|---|---|---|---|---|---|---|---|
| [A] | | p-tert-Butyl phenyl glycidyl ether ("EPIOL (registered trademark)" TB) | | | | | 10 | |
| | | p-sec-Butyl phenyl glycidyl ether ("EPIOL (registered trademark)" SB) | | | | | | 15 |
| [B] | [b1] | N,N-diglycidyl orthotoluidine (GOT) | | | | 35 | | |
| | [b2] | N,N,N',N'-tetraglycidyl-4,4'-diaminodiphenylmethane ("SUMI-EPOXY (registered trademark)" ELM434) | | | | 35 | | |
| | [B] other than [b1] and [b2] | Fluorene epoxy resin ("OGSOL (registered trademark)" PG-100) | | | | | | 15 |
| | | Triglycidyl-p-aminophenol ("Araldite (registered trademark)" MY0500) | | | | | 90 | 70 |
| | | Liquid bisphenol A epoxy resin ("jER (registered trademark)" 828) | 100 | | 95 | | | |
| | | Liquid bisphenol F epoxy resin ("jER (registered trademark)" 806) | | 100 | | 30 | | |
| Epoxy resin other than [A] and [B] | | N-glycidyl phthalimide ("Denacol (registered trademark)" EX-731) | | | 8 | | | |
| | | 1 ,6-Hexanediol diglycidyl ether (YED216) | | | 5 | | | |
| [C] | [c1] | Methyltetrahydrophthalic anhydride (HN-2200) | | 100.0 | | | | |
| | [c2] | Isophoronediamine ("Baxxodur (registered trademark)" EC201 ) | | | | 17.8 | | |
| | | 2,2'-Dimethyl-4,4'-methylenebiscyclohexylamine ("Baxxodur (registered trademark)" EC331 ) | 32.5 | | 100.0 | 17.8 | | |
| | [c3] | Diethyltoluenediamine ("jER Cure (registered trademark)" W) | | | | | 70.0 | |
| | | 3,3'-Diaminodiphenyl sulfone (3,3'DAS) | | | | | 20.0 | |
| | | 4,4'-Diaminodiphenyl sulfone (SEIKACURE-S) | | | | | 10.0 | |
| Other hardeners | | Dicyandiamide | | | | | | 6.3 |
| Accelerator | | DBU salt ("U-CAT (registered trademark)" SA102) | | 2.0 | | | | |
| | | 3-Phenyl-1,1-dimethylurea ("OMICURE (registered trademark)" 94) | | | | | | 2.0 |
| Curing conditions | | - | A | B | A | B | A | B |
| Physical properties of resin | | Cure shrinkage rate (%) | 3.1 | 2.6 | 3.2 | 4.7 | 7.3 | 3.3 |
| | | Gel time (80°C) (min) | 98 | 46 | 75 | 38 | 190 | - |
| | | Rubbery state elastic modulus (MPa) | 14.0 | 12.2 | 12.0 | 14.1 | 16.5 | 12.5 |
| | | Glass transition temperature (°C) | 155 | 128 | 131 | 127 | 180 | 148 |
| CFRP properties | | Tensile strength translation rate (%) | 68 | 70 | 72 | 69 | 67 | 71 |
| | | Evaluation of pultrusion moldability | D | D | D | A | A | D |

**[Table 10]**

| Constituent element | | Component | Comparative Example 7 | Comparative Example 8 | Comparative Example 9 | Comparative Example 10 | Comparative Example 11 | Comparative Example 12 |
|---|---|---|---|---|---|---|---|---|
| [B] | [b1] | N,N-diglycidyl aniline (GAN) | 25 | 50 | 40 | 25 | 50 | 30 |
| | [b2] | N,N,N',N'-tetraglycidyl-4,4'-diaminodiphenylmethane ("SUMI-EPOXY (registered trademark)" ELM434) | | 25 | | | 30 | |
| | [B] other than [b1] and [b2] | Fluorene epoxy resin ("OGSOL (registered trademark)" PG-100) | | | | | | 10 |
| | | Liquid bisphenol A epoxy resin ("jER (registered trademark)" 828) | 50 | 25 | | 50 | 20 | |
| | | Liquid bisphenol F epoxy resin ("jER (registered trademark)" 830) | | | 60 | | | 50 |
| Epoxy resin other than [A] and [B] | | Phenyl glycidyl ether ("Denacol (registered trademark)" EX-141) | 25 | | | 25 | | |
| [C] | [c1] | Methyltetrahydrophthalic anhydride (HN-2200) | 100 | 116 | 105 | | | |
| | [c2] | Isophoronediamine ("Baxxodur (registered trademark)" EC201) | | | | | | 15 |
| | | 3,3'-Dimethyl-4,4'-diaminodicyclohexylmethane ("Baxxodur (registered trademark)" EC331) | | | | | 46 | 15 |
| | [c3] | Diethyltoluenediamine ("Aradur (registered trademark)" 5200) | | | | 28.3 | | |
| Accelerator | | N,N-dimethylbenzylamine ("KAOLIZER (registered trademark)" No. 20) | 2 | 2 | 2 | | | |
| Curing cond itions | | - | A | A | A | A | B | B |
| Resin properties | | Tensile elongation (%) | 3.8 | 2.3 | 3.7 | 4.3 | 3.2 | 3.3 |
| | | Rubbery state elastic modulus (MPa) | 5.5 | 11.4 | 16.0 | 4.3 | 13.2 | 13.0 |
| CFRP properties | | Glass transition temperature (°C) | 82 | 126 | 130 | 86 | 142 | 129 |
| | | Tensile strength translation rate (%) | 80 | 73 | 67 | 82 | 70 | 70 |

**[Table 11]**

| Constituent element | | Component | Comparative Example 13 | Comparative Example 14 | Comparative Example 15 | Comparative Example 16 | Comparative Example 17 | Comparative Example 18 | Comparative Example 23 |
|---|---|---|---|---|---|---|---|---|---|
| [A] | | p-sec-Butyl phenyl glycidyl ether ("EPIOL (registered trademark)"SB) | | | | | | 100 | |
| [B] | | Triglycidyl-m-aminophenol ("Araldite (registered trademark)" MY0610) | | | 23 | | | | |
| | | p-Aminocresol epoxy resin ("SUMI-EPOXY (registered trademark)" ELM-100) | | | | | 25 | | 25 |
| | | Liquid bisphenol A epoxy resin ("jER (registered trademark)" 828) | 100 | 100 | | | 15 | | 60 |
| | | Liquid bisphenol F epoxy resin ("jER (registered trademark)" 806) | | | | 50 | | | |
| | | Liquid bisphenol F epoxy resin ("Araldite (registered trademark)" PY306) | | | 77 | | | | |
| | | Naphthalene novolac epoxy resin (NC-7300L) | | | | | 45 | | |
| Epoxy resin other than [A] and [B] | | Phenyl glycidyl ether ("Denacol (registered trademark)" EX-141) | | | | 50 | | | |
| | | N-glycidyl phthalimide ("Denacol (registered trademark)" EX-731) | | | | | 15 | | 15 |
| [C] | [c1] | Methyltetrahydrophthalic anhydride (HN-2200) | | | | 105.0 | | | |
| | [c2] | Isophoronediamine ("Baxxodur (registered trademark)" EC201) | 22.5 | 13.3 | 29.0 | | | 6.6 | |
| | | 2,2'-Dimethyl-4,4'-methylene biscyclohexylamine ("Baxxodur (registered trademark)" EC331) | | | | | | 15.4 | |
| | | Polypropylene glycol diamine ("JEFFAMINE (registered trademark)" D-230) | | 13.3 | | | | | |
| | [c3] | Diethyltoluenediamine ("Aradur (registered trademark)" 5200) | | | | | | | 28 |
| | | 3,3'-Diaminodiphenyl sulfone (3,3'DAS) | | | 8.7 | | 15.4 | | |
| Accelerator | | DBU salt ("U-CAT (registered trademark)" SA102) | | | | 2.0 | | | |
| | | 2-Ethyl-4-methyl-1 H-imidazole-1-propanenitrile ("Curamid (registered trademark)" CN) | | | 1.2 | | | | |
| Curing conditions | | - | B | B | B | B | B | B | B |
| Physical properties of resin | | Gel time (80°C) (min) | 12 | 29 | 3 | 175 | > 200 | > 200 | - |
| | | Tensile elongation (%) | - | - | - | - | - | - | 2.8 |
| | | Rubbery state elastic modulus (MPa) | 15.5 | 12.5 | 17.1 | 6.7 | - | - | 14.0 |
| | | Glass transition temperature (°C) | 162 | 120 | 177 | 66 | - | - | 121 |
| CFRP properties | | Tensile strength translation rate (%) | 66 | 72 | 65 | 79 | - | - | 69 |

**[Table 12]**

| Constituent element | - | Example 19 | Example 20 | Example 21 | Example 25 | Example 28 |
|---|---|---|---|---|---|---|
| Resin properties | Rubbery state elastic modulus (MPa) | 5.7 | 4.8 | 5.0 | 5.8 | 5.2 |
| Properties of pressure vessel | Glass transition temperature (°C) | 110 | 117 | 120 | 121 | 121 |
| | Strain translation rate (%) | 89 | 92 | 93 | 89 | 90 |
| Constituent element | - | Example 31 | Example 33 | Example 35 | Example 36 | |
| Resin properties | Rubbery state elastic modulus (MPa) | 5.0 | 4.3 | 4.0 | 4.7 | |
| Properties of pressure vessel | Glass transition temperature (°C) | 121 | 120 | 104 | 119 | |
| | Strain translation rate (%) | 92 | 93 | 90 | 92 | |

**[Table 13]**

| Constituent element | - | Comparative Example 7 | Comparative Example 8 | Comparative Example 12 |
|---|---|---|---|---|
| Resin properties | Rubbery state elastic modulus (MPa) | 5.5 | 11.4 | 13.0 |
| Properties of pressure vessel | Glass transition temperature (°C) | 80 | 125 | 128 |
| | Strain translation rate (%) | 90 | 82 | 80 |

**[Table 14]**

| | Example 21 | Example 28 | Example 31 | Example 33 | Comparative Example 7 | Comparative Example 10 |
|---|---|---|---|---|---|---|
| Interlaminar shear strength after wet heat treatment (MPa) | 85 | 91 | 88 | 94 | 67 | 62 |

**[Table 15]**

| Constituent element | | Comparative Example 19 | Comparative Example 20 | Comparative Example 21 | Comparative Example 22 | Comparative Example 24 | Comparative Example 25 | Comparative Example 26 |
|---|---|---|---|---|---|---|---|---|
| Resin properties | Gel time (80°C) (min) | - | - | - | - | > 3hr | > 3hr | > 3hr |
| | Cure shrinkage rate (%) | - | 7.2 | - | - | - | - | - |
| | Rubbery state elastic modulus (MPa) | 25.0 | 21.1 | 11.2 | 18.0 | 12.0 | 11.4 | 10.5 |
| CFRP properties | Glass transition temperature (°C) | 203 | 193 | 105 | 169 | 183 | 149 | 98.0 |
| | Tensile strength translation rate (%) | 61 | 61 | 70 | 63 | 70 | 71 | 72 |
| | Evaluation of pultrusion moldability | - | D | - | - | - | - | - |
| Properties of pressure vessel | Glass transition temperature (°C) | 200 | - | - | - | - | - | - |
| | Strain translation rate (%) | 70 | - | - | - | - | - | - |

### INDUSTRIAL APPLICABILITY

The epoxy resin composition of the present invention is preferably used as a matrix resin for the production of a fiber reinforced material, a molded article, and a pressure vessel according to the first aspect, which have high tensile strength translation rate.

Moreover, the epoxy resin composition and the fiber reinforced material of the present invention are preferably used in general industrial applications.

Furthermore, the pressure vessel according to the second aspect of the present invention is excellent in heat resistance and has high strain translation rate, so that it exhibits a great weight reduction effect and is excellent in pressure resistance. Therefore, the pressure vessel according to the second aspect of the present invention is preferably used as a pressure vessel for storing a high-pressure gas, in particular, a pressure vessel suitably equipped in an automobile or the like.

## Claims

1. An epoxy resin composition comprising the following constituent elements [A] to [C], wherein the constituent element [C] is the following constituent element [c1] or [c2], and a cured product of the epoxy resin composition has a rubbery state elastic modulus in a dynamic viscoelasticity evaluation measured by a method as set out in the description of 10 MPa or less:
[A] a phenyl glycidyl ether substituted with a tert-butyl group, a sec-butyl group, an isopropyl group, or a phenyl group;
[B] a bifunctional or higher functional aromatic epoxy resin; and
[C] a hardener:
[c1] an acid anhydride hardener, wherein the epoxy resin composition comprises an imidazole compound or a tertiary amine compound as an accelerator; or
[c2] aliphatic amine hardeners used in combination.

2. The epoxy resin composition according to claim 1, wherein the constituent element [B] is the following constituent element [b1] or [b2], and the epoxy resin composition has a cure shrinkage rate measured by a method as set out in the description of 3.5 to 7.0%:
[b1] an optionally substituted diglycidyl aniline; or
[b2] tetraglycidyl diaminodiphenylmethane,
and wherein optionally the epoxy resin composition comprises 15 to 50 parts by mass of the constituent element [A] in 100 parts by mass of total epoxy resins.

3. The epoxy resin composition according to claim 1, wherein the constituent element [B] is the following constituent element [b1] or [b2], and a cured product of the epoxy resin composition has a tensile elongation measured by a method as set out in the description of 3.5% or less:
[b1] an optionally substituted diglycidyl aniline; or
[b2] tetraglycidyl diaminodiphenylmethane,
and wherein optionally the epoxy resin composition comprises 20 to 50 parts by mass of the constituent element [A] in 100 parts by mass of total epoxy resins.

4. The epoxy resin composition according to claim 1, having a gel time at 80°C as measured with a rotorless cure meter by a method as set out in the description of 15 to 100 minutes
and wherein optionally the epoxy resin composition comprises 5 to 40 parts by mass of the constituent element [A] in 100 parts by mass of total epoxy resins.

5. The epoxy resin composition according to claim 4, wherein the constituent element [B] is the following constituent element [b1] or [b2] :
[b1] an optionally substituted diglycidyl aniline; or
[b2] tetraglycidyl diaminodiphenylmethane.

6. The epoxy resin composition according to any one of claims 2, 3 and 5, wherein the constituent element [B] includes the constituent elements [b1] and [b2] simultaneously.

7. The epoxy resin composition according to any one of claims 1 to 6, wherein the constituent element [A] is a phenyl glycidyl ether substituted with a tert-butyl group or a sec-butyl group.

8. The epoxy resin composition according to any one of claims 2 to 4, comprising two or more components shown as the constituent element [A].

9. The epoxy resin composition according to any one of claims 1 to 8, wherein the constituent element [C] is the constituent element [c1], and optionally the constituent element [c1] includes a compound having a norbornene backbone or a norbornane backbone.

10. The epoxy resin composition according to any one of claims 1 to 8, wherein the constituent element [C] includes the constituent element [c2], which is a cycloalkyldiamine having a substituent on a carbon atom adjacent to a carbon atom having an amino group,
and wherein optionally the constituent element [C] further includes an aliphatic polyamine having an alkylene glycol structure and/or isophoronediamine as the constituent element [c2].

11. The epoxy resin composition according to any one of claims 1 to 10, having a viscosity at 25°C measured by a method as set out in the description of 2000 mPa·s or less, and optionally having a thickening ratio after 90 minutes at 25°C measured by a method as set out in the description of 4 times or less.

12. The epoxy resin composition according to claim 4 or 5, wherein the cured product of the epoxy resin composition has a compression shear strength in a compression test measured by a method as set out in the description of 50 to 120 MPa.

13. A fiber reinforced material comprising a cured product of the epoxy resin composition according to any one of claims 1 to 12 and a reinforcing fiber.

14. A molded article comprising the fiber reinforced material according to claim 13.

15. A pressure vessel comprising the fiber reinforced material according to claim 13.

## Patentansprüche

1. Epoxidharz-Zusammensetzung, welche die folgenden Komponenten [A] bis [C] umfasst, wobei Komponente [C] die folgende Komponente [c1] oder [c2] ist und ein gehärtetes Produkt aus der Epoxidharz-Zusammensetzung bei einer Beurteilung der dynamischen Viskoelastizität einen durch das in der Beschreibung dargelegte Verfahren gemessenen Elastizitätsmodul im gummiartigen Zustand von 10 MPa oder weniger aufweist:
[A] einen Phenylglycidylether, der mit einer tert-Butylgruppe, einer sec-Butylgruppe, einer Isopropylgruppe oder einer Phenylgruppe substituiert ist;
[B] ein bifunktionelles oder höherfunktionelles aromatisches Epoxidharz; und
[C] einen Härter:
[c1] einen Säureanhydrid-Härter, wobei die Epoxidharz-Zusammensetzung eine Imidazolverbindung oder eine tertiäre Aminverbindung als Beschleuniger umfasst; oder
[c2] in Kombination eingesetzte aliphatische Amin-Härter.

2. Epoxidharz-Zusammensetzung nach Anspruch 1, wobei Komponente [B] die folgende Komponente [b1] oder [b2] ist und die Epoxidharz-Zusammensetzung eine durch das in der Beschreibung dargelegte Verfahren gemessene Härtungsschrumpfungsrate von 3,5 % bis 7,0 % aufweist:
[b1] ein gegebenenfalls substituiertes Diglycidylanilin; oder
[b2] Tetraglycidyldiaminodiphenylmethan;
und wobei die Epoxidharz-Zusammensetzung gegebenenfalls 15 bis 50 Massenteile von Komponente [A] in 100 Massenteilen des gesamten Epoxidharzes umfasst.

3. Epoxidharz-Zusammensetzung nach Anspruch 1, wobei Komponente [B] die folgende Komponente [b1] oder [b2] ist und ein gehärtetes Produkt aus der Epoxidharz-Zusammensetzung eine durch das in der Beschreibung dargelegte Verfahren gemessene Zugdehnung von 3,5 % oder weniger aufweist:
[b1] ein gegebenenfalls substituiertes Diglycidylanilin; oder
[b2] Tetraglycidyldiaminodiphenylmethan;
und wobei die Epoxidharz-Zusammensetzung gegebenenfalls 20 bis 50 Massenteile von Komponente [A] in 100 Massenteilen des gesamten Epoxidharzes umfasst.

4. Epoxidharz-Zusammensetzung nach Anspruch 1, die eine mit einem rotorlosen Härtemessgerät durch das in der Beschreibung dargelegte Verfahren gemessenen Gelierzeit bei 80 °C von 15 bis 100 min aufweist;
und wobei die Epoxidharz-Zusammensetzung gegebenenfalls 5 bis 40 Massenteile von Komponente [A] in 100 Massenteilen des gesamten Epoxidharzes umfasst.

5. Epoxidharz-Zusammensetzung nach Anspruch 4, wobei Komponente [B] die folgende Komponente [b1] oder [b2] ist:
[b1] ein gegebenenfalls substituiertes Diglycidylanilin; oder
[b2] Tetraglycidyldiaminodiphenylmethan.

6. Epoxidharz-Zusammensetzung nach einem der Ansprüche 2, 3 und 5, wobei Komponente [B] die Komponenten [b1] und [b2] gleichzeitig enthält.

7. Epoxidharz-Zusammensetzung nach einem der Ansprüche 1 bis 6, wobei Komponente [A] ein Phenylglycidylether ist, der mit einer tert-Butylgruppe oder einer sec-Butylgruppe substituiert ist.

8. Epoxidharz-Zusammensetzung nach einem der Ansprüche 2 bis 4, die zwei oder mehr der als Komponente [A] genannten Komponenten umfasst.

9. Epoxidharz-Zusammensetzung nach einem der Ansprüche 1 bis 8, wobei Komponente [C] die Komponente [c1] ist und die Komponente [c1] gegebenenfalls eine Verbindung mit einer Norbornen-Hauptkette oder einer Norbornan-Hauptkette aufweist.

10. Epoxidharz-Zusammensetzung nach einem der Ansprüche 1 bis 8, wobei Komponente [C] die Komponente [c2] umfasst, die ein Cycloalkyldiamin mit einem Substituenten an einem Kohlenstoffatom neben einem Kohlenstoffatom mit einer Aminogruppe umfasst;
und wobei Komponente [C] gegebenenfalls weiters ein aliphatisches Polyamin mit einer Alkylenglykol-Struktur und/oder Isophorondiamin als Komponente [c2] umfasst.

11. Epoxidharz-Zusammensetzung nach einem der Ansprüche 1 bis 10, die eine durch das in der Beschreibung dargelegte Verfahren gemessenen Viskosität bei 25 °C von 2000 mPa□s oder weniger und gegebenenfalls ein durch das in der Beschreibung dargelegte Verfahren gemessenes Verdickungsverhältnis nach 90 min bei 25 °C von 4 oder weniger aufweist.

12. Epoxidharz-Zusammensetzung nach Anspruch 4 oder 5, wobei ein gehärtetes Produkt aus der Epoxidharz-Zusammensetzung in einem Drucktest eine durch das in der Beschreibung dargelegte Verfahren gemessene Druckscherfestigkeit von 50 bis 120 MPa aufweist.

13. Faserverstärktes Material, das ein gehärtetes Produkt aus einer Epoxidharz-Zusammensetzung nach einem der Ansprüche 1 bis 12 und Verstärkungsfasern umfasst.

14. Formteil, das ein faserverstärktes Material nach Anspruch 13 umfasst.

15. Druckbehälter, der ein faserverstärktes Material nach Anspruch 13 umfasst.

## Revendications

1. Composition de résine époxy comprenant les éléments constituants [A] à [C] suivants, dans laquelle l'élément constituant [C] est l'élément constituant [c1] ou [c2] suivant, et un produit durci de la composition de résine époxy a un module élastique d'état caoutchouteux dans une évaluation de viscoélasticité dynamique mesuré par une méthode telle que décrite dans la description de 10 MPa ou moins :
[A] un éther phénylglycidylique substitué par un groupe tert-butyle, un groupe sec-butyle, un groupe isopropyle ou un groupe phényle ;
[B] une résine époxy aromatique bifonctionnelle ou de fonctionnalité plus élevée ; et
[C] un agent de durcissement :
[c1] un agent de durcissement de type anhydride acide, dans laquelle la composition de résine époxy comprend un composé imidazole ou un composé amine tertiaire en tant qu'accélérateur ; ou
[c2] des agents de durcissement de type amine aliphatique utilisés en combinaison.

2. Composition de résine époxy selon la revendication 1, dans laquelle l'élément constituant [B] est l'élément constituant [b1] ou [b2] suivant, et la composition de résine époxy a un taux de rétrécissement lors du durcissement mesuré par une méthode telle que décrite dans la description de 3,5 à 7,0 % :
[b1] une diglycidylaniline éventuellement substituée ; ou
[b2] le tétraglycidyldiaminophénylméthane,
et dans laquelle éventuellement la composition de résine époxy comprend de 15 à 50 parties en masse de l'élément constituant [A] dans 100 parties en masse des résines époxy totales.

3. Composition de résine époxy selon la revendication 1, dans laquelle l'élément constituant [B] est l'élément constituant [b1] ou [b2] suivant, et un produit durci de la composition de résine époxy a un taux d'allongement à la traction mesuré par une méthode telle que décrite dans la description de 3,5 % ou moins :
[b1] une diglycidylaniline éventuellement substituée ; ou
[b2] le tétraglycidyldiaminophénylméthane,
et dans laquelle éventuellement la composition de résine époxy comprend de 20 à 50 parties en masse de l'élément constituant [A] dans 100 parties en masse des résines époxy totales.

4. Composition de résine époxy selon la revendication 1, ayant un temps de gélification à 80 °C tel que mesuré avec un appareil de mesure du durcissement sans moteur par une méthode telle que décrite dans la description de 15 à 100 minutes
et dans laquelle éventuellement la composition de résine époxy comprend de 5 à 40 parties en masse de l'élément constituant [A] dans 100 parties en masse des résines époxy totales.

5. Composition de résine époxy selon la revendication 4, dans laquelle l'élément constituant [B] est l'élément constituant [b1] ou [b2] suivant :
[b1] une diglycidylaniline éventuellement substituée ; ou
[b2] le tétraglycidyldiaminophénylméthane.

6. Composition de résine époxy selon l'une quelconque des revendications 2, 3 et 5, dans laquelle l'élément constituant [B] inclut les éléments constituants [b1] et [b2] simultanément.

7. Composition de résine époxy selon l'une quelconque des revendications 1 à 6, dans laquelle l'élément constituant [A] est un éther phénylglycidylique substitué par un groupe tert-butyle ou un groupe sec-butyle.

8. Composition de résine époxy selon l'une quelconque des revendications 2 à 4, comprenant deux composants ou plus présentés en tant qu'élément constituant [A].

9. Composition de résine époxy selon l'une quelconque des revendications 1 à 8, dans laquelle l'élément constituant [C] est l'élément constituant [c1], et éventuellement l'élément constituant [c1] inclut un composé ayant un squelette norbornène ou un squelette norbornane.

10. Composition de résine époxy selon l'une quelconque des revendications 1 à 8, dans laquelle l'élément constituant [C] inclut l'élément constituant [c2], qui est une cycloalkyldiamine ayant un substituant sur un atome de carbone adjacent à un atome de carbone ayant un groupe amino, et dans laquelle éventuellement l'élément constituant [C] inclut en outre une polyamine aliphatique ayant une structure alkylène glycol et/ou une isophoronediamine en tant qu'élément constituant [c2].

11. Composition de résine époxy selon l'une quelconque des revendications 1 à 10, ayant une viscosité à 25 °C mesurée par une méthode telle que décrite dans la description de 2 000 mPa.s ou moins, et éventuellement ayant un rapport d'épaississement après 90 minutes à 25 °C mesuré une méthode telle que décrite dans la description de 4 fois ou moins.

12. Composition de résine époxy selon la revendication 4 ou 5, dans laquelle le produit durci de la composition de résine époxy a une résistance au cisaillement par compression dans un test de compression mesurée par une méthode telle que décrite dans la description de 50 à 120 MPa.

13. Matériau renforcé par une fibre comprenant un produit durci de la composition de résine époxy selon l'une quelconque des revendications 1 à 12 et une fibre de renforcement.

14. Article moulé comprenant le matériau renforcé par une fibre selon la revendication 13.

15. Récipient sous pression comprenant le matériau renforcé par une fibre selon la revendication 13.
